(19) Europäisches Patentamt
European Patent Office
Office européen des brevets

(11) **EP 0 720 125 B1**

(12) **FASCICULE DE BREVET EUROPEEN**

(45) Date de publication et mention
de la délivrance du brevet:
**08.05.2002 Bulletin 2002/19**

(51) Int Cl.7: **G06T 5/00**

(21) Numéro de dépôt: **95203550.9**

(22) Date de dépôt: **19.12.1995**

(54) **Dispositif de formation d'image et procédé pour effectuer des corrections de distorsions optiques géométriques dans une image**

Bilderzeugungsgerät und Verfahren zur Verbesserung geometrischer optischer Bildverzerrungen

Image forming apparatus and method for correcting optical geometrical distortions in an image

(84) Etats contractants désignés:
**DE FR GB IE**

(30) Priorité: **29.12.1994 FR 9415872**

(43) Date de publication de la demande:
**03.07.1996 Bulletin 1996/27**

(73) Titulaire: **Koninklijke Philips Electronics N.V.**
**5621 BA Eindhoven (NL)**

(72) Inventeurs:
• **Florent, Raoul, Société Civile S.P.I.D.**
**F-75008 Paris (FR)**
• **Lelong, Pierre, Société Civile S.P.I.D.**
**F-75008 Paris (FR)**

(74) Mandataire: **Lottin, Claudine et al**
**Société Civile S.P.I.D.**
**156, Boulevard Haussmann**
**75008 Paris (FR)**

(56) Documents cités:
**EP-A- 0 479 618**

• **SIGNAL PROCESSING, vol. 17, no. 3, Juillet 1989 NETHERLANDS, pages 191-200, UNSER M. ET AL. 'Iterative Restoration of Noisy Elastically Distorted Periodic Images.'**
• **IEEE TRANSACTIONS ON MEDICAL IMAGING, vol. 11, no. 1, Mars 1992 USA, pages 117-122, SMITH W. E. ET AL. 'Correction of Distortion in Endoscope Images.'**
• **PHOTOGRAMETRIC ENGINEERING, vol. 36, no. 6, Juin 1970 USA, pages 584-588, VAN ROESSEL J. 'Estimating Lens Distortion with Orthogonal Polynomials.'**

**Description**

L'invention concerne un dispositif de formation d'image comprenant : un système de prise de vue, un système de saisie des données d'une image source distordue par le système de prise de vues, un système de numérisation de ladite image source incluant une première mémoire d'image pour le stockage des données d'intensité de chaque pixel repéré par une adresse dans une matrice bidimensionnelle, un système de traitement d'image numérique construction d'une image cible corrigée en distorsions, correspondant à l'image source.

L'invention concerne également un procédé pour effectuer des corrections de distorsions optiques géométriques produites par un dispositif de prise de vue dans une image.

L'invention trouve son application dans la correction des images numérisées dans le domaine des systèmes à R-X, ou bien des systèmes vidéo, ou bien des systèmes d'imagerie numériques.

Des distorsions géométriques significatives peuvent être introduites par l'objectif d'une caméra dans l'image produite par cette caméra, tout particulièrement, si cet objectif est du type grand-angle. Ces distorsions géométriques sont le plus souvent du type dit en tonneau, ou du type dit en coussin. Ces distorsions géométriques apparaissent même si l'objectif de la caméra est de très bonne qualité.

Une méthode de correction des images endoscopiques est déjà connues de la publication intitulée "Correction of Distortion in Endoscope Images" par Warren E. SMITH, Nimish VAKIL, et Seth A. MAISLIN dans IEEE TRANSACTIONS ON MEDICAL IMAGING, VOL. 11, NO. 1, MARCH 1992. Ce document décrit une méthode pour corriger les distorsions radiales en utilisant une formule de correction polynomiale. L'algorithme comprend des étapes de:

Estimation d'un centre de distorsion d'une image de calibrage distordue; le centre de distorsion correspond à l'axe optique de la lentille endoscopique;
Définition d'un groupe de N+1 points discrets de calibrage en partant du centre, pour caractériser la distorsion radiale, dans l'image de calibrage;
Calculer, à partir des données de ces points, les coefficients de polynomes de "Chebyshev";
Sélectionner un pixel dans un espace d'image non distordu;
Calculer les coordonnées de ce pixel;
Calculer les coordonnées correspondantes dans l'espace distordu en utilisant les polynomes de "Chebyshev";
Appliquer l'intensité du pixel trouvé dans l'espace distordu au pixel de l'image non distordue.

Il est déjà par ailleurs connu de l'état de la technique par la demande de brevet GB 2 256 989 un dispositif pour réaliser une compensation des imperfections optiques dans une caméra de télévision. Ce dispositif comprend une caméra de prise de vue d'enregistrement de l'image formée par le système optique, et des moyens pour numériser cette image qui incluent le stockage des données d'intensité de chaque pixel courant. Ce dispositif comprend en outre un correcteur d'erreur pour compenser les erreurs géométriques, d'enregistrement, et chromatiques et compenser ainsi les imperfections optiques du système de prise de vue à lentille. Ce correcteur d'erreur est commandé par un contrôleur de correction. Ce contrôleur de correction reçoit, via une interface, des informations extérieures, appropriées à le programmer pour qu'il fournisse au correcteur d'erreur des signaux de contrôle qui prennent en compte des paramètres du système de prise de vue. Dans ces conditions, le correcteur d'erreur est capable de corriger les données des pixels. Dans le correcteur d'erreur, une mémoire cartographique reçoit du contrôleur de correction ces signaux de contrôle dépendant des paramètres du système de prise de vue. Cette mémoire cartographique est tabulée en fonction de ces paramètres de manière à définir la cartographie qu'il est nécessaire d'utiliser pour corriger les défauts du système optique avec un type de lentille donné et dans des conditions de prise de vue données. La sortie de la mémoire cartographique est fournie à un interpolateur utilisé pour améliorer la définition de l'image de sortie. La mémoire cartographique est calibrée en fournissant à la caméra de prise de vue une MIRE de test ayant un dessin de grille carrée régulière, et en ajustant manuellement les paramètres stockés, de manière à obtenir en sortie du dispositif une grille corrigée. Cette opération peut être réalisée en affichant par exemple la sortie du dispositif sur un écran muni d'un graticule superposé.

Le dispositif connu du brevet GB 2 256 989 n'opère donc pas les corrections des imperfections du système de prise de vue de manière automatique. Il faut lui fournir des données sur la distance focale de la lentille, la distance de prise de vue, et le taux de zoom utilisé. Il faut en outre entrer dans une mémoire cartographique, pour chaque type de lentille et chaque condition de prise de vue, des tableaux dans lesquels seront puisées les informations relatives aux nouvelles adresses à affecter aux pixels de l'image cible, pour remplacer les adresses d'origine de ces pixels dans l'image source c'est-à-dire dans l'image directement issue du système de prise de vue et entachée d'imperfections. Ainsi l'image cible peut être corrigée des distorsions de l'image source. Aucun moyens automatiques de tabulation de la mémoire cartographique, ou moyens automatiques pour calculer des fonctions de correction à appliquer aux pixels de l'image source, pour obtenir les pixels de l'image cible ne sont enseignés par le document cité. Seuls des moyens de calibration manuels de la mémoire cartographique sont divulgués, incluant la superposition de l'image cible distordue d'une grille sur un graticule de référence et la correction par l'action manuelle sur des paramètres d'entrée du système de prise de vue.

Un but de la présente invention est de proposer un dispositif, ainsi qu'un procédé, pour calculer des fonctions de correction des distorsions optiques d'un système de prise de vue, pour obtenir des données de pixels permettant de construire une image cible corrigée.

Ces buts sont atteints au moyen d'un dispositif tel que revendiqué à la Revendication 1.

Un procédé pour effectuer des corrections de distorsions optiques produites par un système de prise de vue, dans une image, comprend des étapes telles que revendiquées à la Revendication 2.

L'invention est décrite ci-après en détail, en référence avec les figures schématiques annexées dont :

la FIG.1A qui représente un dispositif de formation d'images incluant un système de prise de vue et deux sous-ensembles d'un système de traitement d'images numériques, l'un pour déterminer et l'autre pour appliquer des lois de corrections géométriques des distorsions optiques du système de prise de vue ;

les FIG.1B et 1C qui illustrent l'étape de calibrage pour l'acquisition d'une mire de test par le système de prise de vue ;

la FIG.2 qui représente un diagramme schématique de blocs formant le premier sous-ensemble du système de traitement d'image, pour mettre en oeuvre un procédé de détermination de lois de corrections et de détermination du centre de distorsion, pour corriger géométriquement les distorsions optiques provoquées par le système de prise de vue ;

les FIG.3A à 3G qui représentent des images source et cible dans les différentes étapes du procédé ;

la FIG.4A qui représente une intersection dans la grille source et illustre le filtrage non linéaire pour extraire les points de référence ;

la FIG.4B qui représente une intersection dans la grille source pour la détermination du point de référence $R_k^0$ le plus proche du centre de distorsion, par un critère d'alignement ;

la FIG.4C qui représente un sous-ensemble horizontal $HS_k^0$ de points de référence pour la détermination du pas de la première grille $TG^0$, par un premier filtrage médian ;

la FIG.4D qui représente un sous-ensemble central $S'^0_k$ de points de référence pour la détermination du pas de la première grille théorique $TG^0$, par un second filtrage médian ;

la FIG.4E qui illustre la formation de couronnes rectangulaires de taille croissance, pour la formation des couples $P_k^0$ ;

les FIG.5A et 5B qui représentent des images sources distordues en coussin et en tonneau respectivement ;

la FIG.6A qui illustre la mise en correspondance d'un point de grille $TR_{g(k\alpha)}^0$ et d'un point de référence $R_{f(k\alpha)}$ dans une couronne rectangulaire $\alpha$, et la FIG.6B qui illustre la même opération dans une couronne adjacente plus grande $\beta$ ;

la FIG.7A qui illustre la détermination des erreurs $\Delta_k^n$ d'alignement des couples $P_k^n$ sur le centre optique $OC^n$, ces erreurs étant dues à la distorsion ;

la FIG.7B qui illustre la détermination des couples de rayons $X_k^n$ et $Y_k^n$ pour l'estimation de la fonction polynomiale $F^n$ ;

la FIG.7C représente les points des couples $P_k^{Nlast}$ idéalement alignés avec le centre $OC^{Nlast}$ qui minimise au mieux l'erreur de modélisation ;

la FIG.8A qui illustre la détermination d'un polynôme $F^n$ pour relier au mieux les points formés par les couples de rayons $X_k^n$ et $Y_k^n$ reportés respectivement en abscisse et en ordonnée sur un graphe dans un repère gradué en pixels d'origine $OC^n$ ;

la FIG.8B qui illustre la détermination du premier polynôme $F^0$ à l'itération zéro dans la méthode itérative et la FIG. 8C illustre la détermination d'un polynôme amélioré $F^m$ à une itération n ultérieure ;

la FIG.8D qui montre les points des couples $P_k^{Nlast}$ idéalement placés sur la courbe représentative du meilleur polynôme $F^{Nlast(Nopt)}$ pour minimiser l'erreur de modélisation.

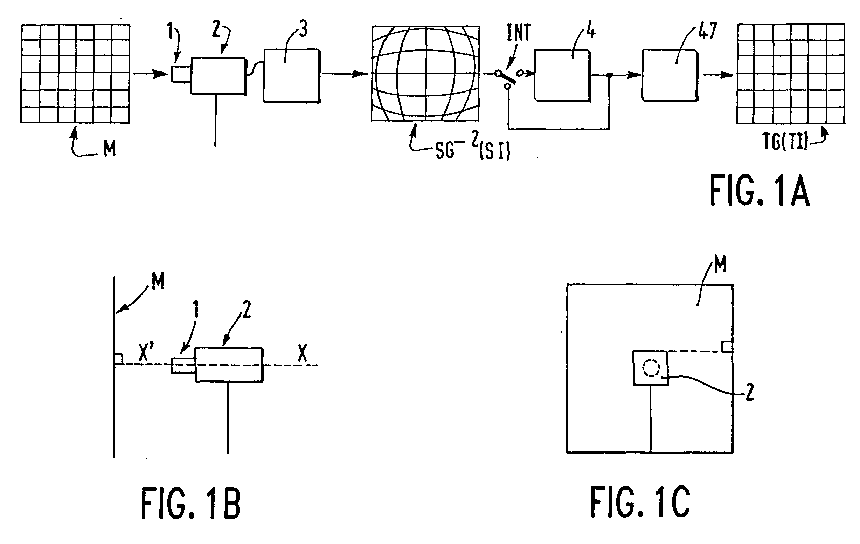

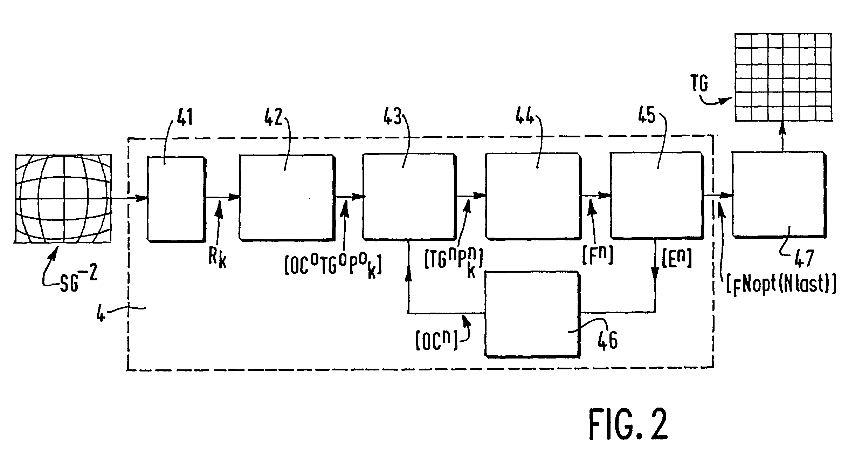

### I - <u>DISPOSITIF</u> (Fig.1A, Fig.2)

D'une manière générale, un système de prise de vue de caméra peut inclure un système optique à lentille de type grand angle, ou bien un système de lentilles de type zoom qui produisent des distorsions optiques géométriques dans l'image formée par cette caméra. Ces distorsions apparaissent même si le système optique est de très bonne qualité.

En référence avec la FIG.1A, un dispositif de formation d'image comprend un système de prise de vue 1 ayant un système optique à lentilles, qui fournit une image distordue d'une scène. Ce système optique 1 à lentille est attaché à une caméra 2 qui convertit l'image optique en signaux électriques grâce à un élément à CCD par exemple. Ces signaux électriques sont fournis à un système de numérisation 3 capable de stocker les données d'image numérisées c'est-à-dire les données d'intensité relatives à chaque adresse des pixels de l'image repérés dans une matrice bidimensionnelle, dans une première mémoire d'images. Ces données d'image numérisée sont relatives à l'image distordue.

Ce dispositif de formation d'images comprend aussi un système de traitement de signal numérique qui comprend un sous-ensemble 47 qui traite les données d'image numérisées stockées dans la mémoire d'image du système de numérisation 3 pour fournir des données d'une image numérique correspondante, reconstruite avec correction des distorsions, ces données étant finalement stockées dans une seconde mémoire d'image.

On appellera ci-après image source SI les données d'image numériques en sortie du système de numérisation 3 relatives à une image distordue par le système de prise de vue, et image cible TI les données d'images numériques fournies par le sous-ensemble 47 du système de traitement d'image, relatives à l'image reconstruite corrigée en distorsion.

Le sous-ensemble 47 du système de traitement d'image comprend, stockées dans une puce ou dans une table (LOOK UP TABLE) des lois de correction des distorsions pour construire l'image cible corrigée TI. Ces lois doivent être déterminées au moyen d'un procédé comprenant des étapes préliminaires. Un des buts de l'invention est de fournir un tel procédé pour déterminer ces lois de corrections de manière automatique. Les lois de corrections sont déterminées une fois pour toutes dans un premier sous-ensemble 4 du système de traitement. Ensuite, elles sont appliquées automatiquement au moyen du sous-ensemble 47 du système de traitement d'image appelé second sous-ensemble 47. L'interrupteur INT sur la FIG.1A permet de mettre hors circuit le premier sous-ensemble 4 du système de traitement, lorsque ces lois ont été déterminées.

On décrit ultérieurement le procédé de détermination des lois de correction mis en oeuvre dans le premier sous-ensemble 4 du système de traitement d'image. Ce premier sous-ensemble 4 pourra aussi être une extension du système de numérisation 3, ou être intégré dans ce système de numérisation 3.

Dans le dispositif de formation d'image selon l'invention, tel que représenté sur les FIG.1A et 2 :

a/ Dans le premier sous-ensemble 4 du système de traitement, on met en oeuvre : des étapes de calcul pour déterminer une fois pour toutes :

* des lois de correction géométriques des distorsions produites par le système 1 de prise de vue,
* et la localisation précise du centre des distorsions géométriques, qui est aussi le centre optique du système à lentilles de la caméra, dans la plupart des cas.

b/ Dans le second sous-ensemble 47 du système de traitement, on met en oeuvre des étapes de calcul, pour construire, aux moyens des lois précédentes et de la connaissance du centre de distorsion, pour chaque image source SI distordue, une image cible TI corrigée en distorsion.

On décrit ci-après :

* une méthode pour déterminer ces lois de correction des distorsions géométriques et pour déterminer de façon concomitante la localisation précise du centre de distorsion, mise en oeuvre dans le premier sous-ensemble 4,
* une méthode pour construire l'image cible TI en utilisant ces connaissances, mise en oeuvre dans le second sous-ensemble 47.

## II/ METHODE POUR DETERMINER LES LOIS DE CORRECTION ET LE CENTRE DE DISTORSION (FIG.1, bloc 4 ; FIG.2, blocs 41 à 46)

Un procédé pour déterminer de manière concomitante ces lois de correction et les coordonnées précises du centre de distorsion est décrit ci-après, en référence avec la FIG.2 qui en représente les différentes étapes par un diagramme schématique de blocs.

Ce procédé ne nécessite aucune mesures préliminaires telle que la mesure de la distance focale, ou la mesure de la distance de prise de vue, ou la mesure réelle du pas d'une grille test.

Ce procédé repose sur l'utilisation de l'hypothèse que les distorsions géométriques engendrées par le système de prise de vue sont radiales, c'est-à-dire que, dans l'image cible construite par le second sous-ensemble 47 du système de traitement, un point corrigé doit se trouver sur un rayon déterminé par le point distordu et par le centre de distorsion. C'est pourquoi ce procédé nécessite, en plus de la détermination des lois de correction, la détermination précise concomitante du centre de distorsion. Néanmoins ce procédé ne nécessite aucune mesure réelle précise préliminaire. Dans ce procédé, on ne cherchera pas à mesurer précisément, par un senseur par exemple, la localisation du **centre optique de la caméra,** puisque seul le centre de distorsion de l'image source est intéressant, du fait que les distorsions sont radiales autour du centre de distorsion.

En référence à la FIG.2, ce procédé mis en oeuvre dans le premier sous-ensemble 4 comprend au moins les étapes suivantes :

## II. A/ ACQUISITION D'UNE MIRE

Cette étape comprend les sous-étapes suivantes.

### II.A1/ Construction d'une mire (FIG.1A)

On réalise une mire de test M. On choisit de préférence à cet effet de réaliser le dessin d'une grille sur un support plan rigide. Les mailles de cette grille peuvent être carrées ou rectangulaires. Dans un exemple, cette mire peut être un dessin sur un support à fond blanc d'1m x 1.50m, représentant des barreaux noirs horizontaux et verticaux formant des mailles carrées comme montré en M sur la FIG.1A.

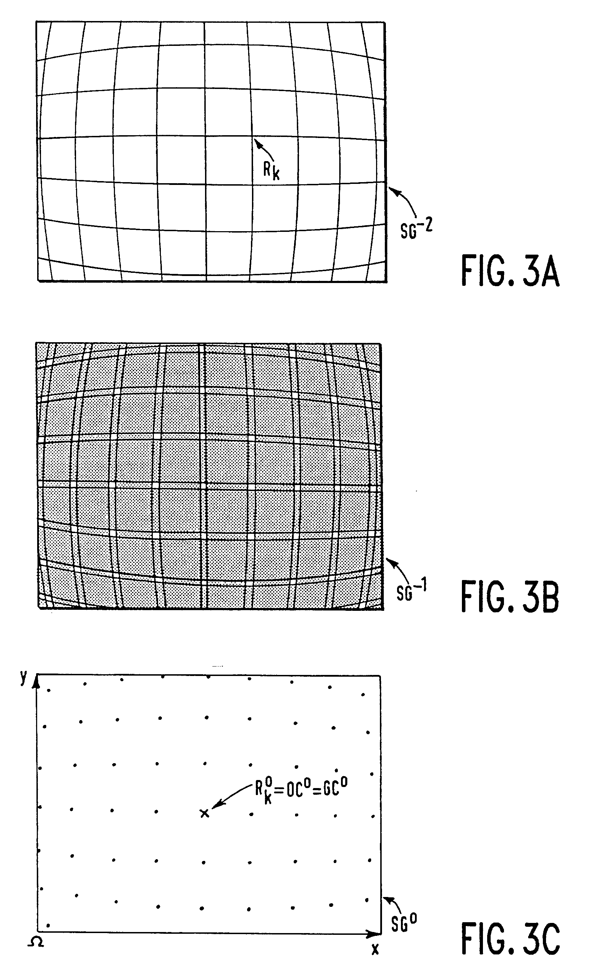

### II.A2/ Calibrage de la caméra (FIG.1B, FIG.1C, FIG.3A)

On place la caméra face au plan de la mire M pour faire l'acquisition d'une image nette de cette mire. Un calibrage est réalisé avant d'effectuer la prise de vue. Ce calibrage consiste à :

* rendre le support plan de la mire M perpendiculaire à l'axe optique X'X de la caméra de prise de vue, comme illustré par la FIG.1B ;
* rendre les barreaux de la grille parallèles aux lignes et aux colonnes de l'élément à CCD de la caméra 2, comme illustré par la FIG.1C ;
* placer le plan support de la grille de telle sorte que tout le plan image de la caméra soit couvert par des mailles de grille, comme illustré par la FIG.3A.

Les conditions de calibrage consistent donc essentiellement à vérifier trois conditions d'orthogonalité, deux de ces conditions d'orthogonalité étant vérifiées lorsque l'axe optique X'X de la caméra est perpendiculaire au plan de la mire, et la troisième lorsque les barreaux de la grille de mire sont parallèles respectivement aux lignes et colonnes orthogonales de l'élément à CCD de la caméra.
L'opération de calibrage peut être effectuée en utilisant simplement des équerres. Ce calibrage n'est pas contraignant car il apparaît que le procédé selon l'invention est très robuste à d'éventuelles imperfections de ce calibrage.

### II.A3/ Acquisition d'une image de la grille servant de mire (FIG.1A et FIG.3A), référencée grille source

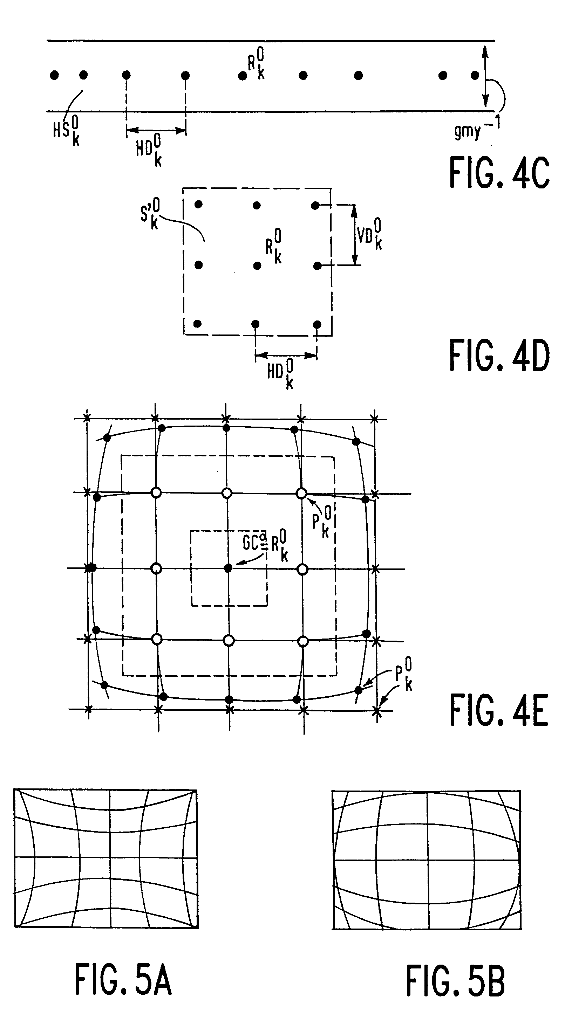

A l'aide de la caméra 2, munie de son système optique à lentilles 1, on effectue une mise au point et une prise de vue de la grille servant de mire M. Le système de numérisation 3 en fournit une image numérisée sous forme d'une grille, appelée grille source $SG^{-2}$, montrant des distorsions optique comme représentée sur la FIG.3A.
Les distorsions peuvent être en forme de coussin comme sur la FIG.5A, ou en forme de tonneaux comme sur les FIG.5B et 3A.

## II.B/ EXTRACTION DE POINTS DE REFERENCE $R_k$ (FIG.2, bloc 41)

Une image de la grille source distordue est numérisée et stockée dans les moyens de numérisation et stockage 3 montrés sur la FIG.1.
En référence à la FIG.3A, **dans l'image de la grille source $SG^{-2}$ numérisée,** on appelle ci-après **"points de référence"** $R_k$ des points d'intersection des barreaux verticaux et horizontaux de cette grille source distordue $SG^{-2}$. Par horizontal et vertical, on entend parallèles aux lignes et aux colonnes de l'élément à CCD de la caméra, comme il résulte du calibrage.
En ce qui concerne les notations :

* pour les points de référence $R_k$, k est un indice qui permet de numéroter les points de référence de la grille source ; ces numéros peuvent être 1 à 500 par exemple,
* pour les images de la grille source, par exemple $SG^{-2}$, l'exposant permet de numéroter l'étape du traitement d'image. Ici l'exposant (-2) indique que cette étape est la deuxième avant celle qui fournira l'image de grille source $SG^0$ des lois et du centre recherchés.

En référence à la FIG.2, la chaîne des opérations formant les étapes du procédé selon l'invention, comprend une première étape mise en oeuvre dans le bloc 41, consistant en l'extraction des points de référence $R_k$ de l'image de la grille source SG$^{-2}$, par la détermination de leur adresse dans cette image source au moyen des sous-étapes suivantes:

*   un filtrage de l'image source pour rehausser l'intensité des zones d'intersection,
*   un seuillage de l'image filtrée ;
*   une labellisation des points seuillés pour former des zones, et une extraction du barycentre de chaque zone.

**II.B1/ Rehaussement du niveau d'intensité des zones d'intersection par filtrage (FIG.3B ; FIG.2, bloc 41)**

Dans le cas pris comme exemple où les barreaux de la grille mire sont représentés en noir sur fond blanc ou clair, les zones d'intersection des barreaux verticaux et des barreaux horizontaux sont noires comme montré sur la FIG.3A. Dans cette sous-étape, **on réalise un traitement de l'image numérisée de la grille distordue SG$^{-2}$** pour rendre ces zones claires, et pour rendre plus sombre tout le reste de l'image. **On obtient ensuite l'image d'une grille-source notée SG$^{-1}$** comme montré ensuite sur la FIG.3B.

Ce traitement peut être mené à bien par une première méthode connue de l'homme du métier consistant en un filtrage linéaire au moyen de filtres linéaires correspondant à des masques de corrélation ayant la forme d'une croix.

On aurait pu, aussi, au lieu d'une mire de test en forme de grille, choisir une mire de points. L'expérience a montré que l'enregistrement par la caméra d'une mire de points est moins bon que celui d'une mire en forme de grille, à cause d'effets d'éblouissement. L'enregistrement d'une mire en forme de grille a en outre l'avantage de fournir davantage d'informations exploitables pour mener à bien le procédé selon l'invention.

On propose ci-après une méthode de traitement qui met en oeuvre un filtrage non linéaire notablement plus efficace que le filtrage linéaire connu. Les avantages de ce filtrage non linéaire par rapport à un filtre linéaire conventionnel sont qu'il :

*   ne produit pas de tache d'éblouissement,
*   est très robuste à la distorsion de l'intersection,
*   il est facile à mettre en oeuvre.

Dans l'étape d'extraction des points de référence qui est opérée sur l'image source numérisée SG$^{-2}$ de la grille, le rehaussement des intensités des intersections des barreaux de grille est essentiel. Il est donc important de réaliser un très bon filtrage.

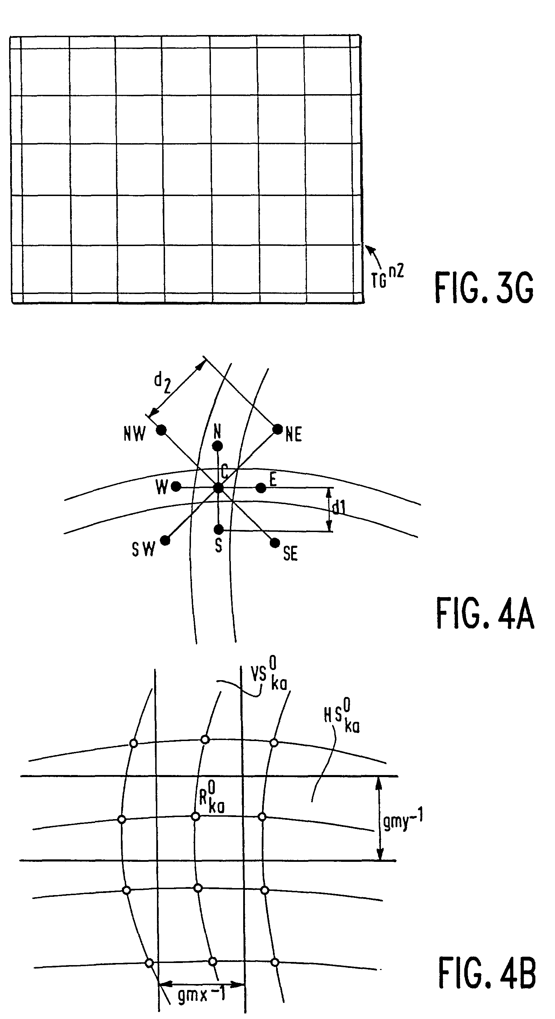

Une intersection d'un barreau de grille horizontal avec un barreau de grille vertical est représentée schématiquement sur la FIG.4A. Les bords du barreau horizontal et du barreau vertical sont représentés par des lignes distordues puisque l'on se trouve dans l'image source distordue.

Dans cette étape, on passe un filtre en chaque point de l'image source SG$^{-2}$ de la FIG.3A. Par ce filtrage, on détermine :

*   C le centre du filtre,
*   S, N, E, W quatre points cardinaux,
*   SE, SW, NE, NW quatre points en diagonale.

Les 8 points entourant le centre C du filtre sont entièrement définis par des distances d1 et d2.

*   d1 et la distance mesurée en pixels entre le centre C et les points cardinaux (d1 = C-S, C-N, C-E, C-W),
*   d2 est la distance mesurée en pixels entre le centre C et les points en diagonale (d2 = C-SE, C-SW, C-NE, C-NW).

La distance d1 est choisie telle que les points cardinaux retenus sont situés à l'intérieur du dessin des barreaux de grille quand le centre C est situé dans la zone d'intersection. Ce résultat est obtenu en choisissant d1 de l'ordre de 1 à 5 pixels ; d'une manière générale de l'ordre de la moitié de l'épaisseur d'un barreau de grille mesurée en pixels dans l'image distordue.

La distance d2 est choisie de telle sorte que les points diagonaux correspondants sont situés dans le fond de l'image, c'est-à-dire en dehors des régions de dessin de barreaux de grille. Cet effet est obtenu en choisissant d2 mesuré en pixels, de l'ordre de la moitié du pas de la grille distordue dans l'image numérisée. Par exemple pour une grille ayant un pas de l'ordre de 50 pixels, d2 pourra être de 20 pixels.

En choisissant des distances d1 et d2 raisonnables que l'homme du métier peut déterminer par quelques essais de routine, sans qu'aucune précision soit requise, ce filtrage permet d'obtenir que, lorsque le centre du filtre est à l'intérieur d'une zone d'intersection, alors les points cardinaux S, N, E, W sont à l'intérieur des régions des dessins des barreaux de grille, et les points en diagonale sont effectivement dans le fond, et ceci même dans les régions de l'image distordue où l'on trouve les plus fortes distorsions.

Dans le cas exemple de la grille formée de barreaux noirs sur fond blanc, avant filtrage, dans l'image SG$^{-2}$, l'intensité de chacun de ces cinq points, constitués par le centre et les quatre points cardinaux, est faible, alors que l'intensité des quatre points diagonaux est élevée.

Par le filtrage non linéaire selon l'invention, on réalise une mesure exprimée par la mesure du critère FILT suivant :

$$FILT = Min(NW, NE, SE, SW) - Max(C, N, S, E, W).$$

Dans ce critère Min(NW, NE, SW, SE) signifie que l'on évalue le minimum d'intensité relatif aux points en diagonale, et Max(C, N, S, E, W) signifie que l'on évalue le maximum d'intensité relatif aux points cardinaux incluant le centre.

Lorsque le filtre est correctement centré sur une intersection, normalement l'intensité de chacun des points en diagonale est grande donc le minimum d'intensité évalué sur les intensité de ces points est encore grand. D'autre part, normalement l'intensité de chacun des cinq points, centre et points cardinaux, est faible, donc le maximum d'intensité évalué sur les intensités de ces points est encore faible. Il en résulte que la différence entre ce Min et ce Max est grande.

Le filtre non linéaire réalise l'évaluation de ce critère FILT en chaque point de l'image distordue de la FIG.3A. Le résultat du calcul du critère FILT constitue la sortie du filtre non linéaire selon l'invention.

Les régions d'intersection détectées sont celles où la mesure de ce critère est la plus grande. L'image obtenue résultant de ce filtrage est **une nouvelle grille source SG$^{-1}$** et montre, comme sur la FIG.3B, que les régions d'intersection sont rehaussées en intensité, et que les autres régions de l'image source distordue sont assombries.

## II.B2/ Seuillage appliqué aux intensités des points rehaussés (FIG.2, bloc 41 ; FIG.3C)

Après la sous-étape de rehaussement de l'intensité des points des zones d'intersection, on réalise une sous-étape de seuillage sur l'intensité de ces points.

On propose ci-après une méthode de seuillage performante pour l'application à la détection des points de référence. Selon cette méthode, **un seuillage est mené à bien dans l'image rehaussée SG$^{-1}$** en sélectionnant un nombre référencé Nb représentant le nombre des points de plus forte intensité.

L'homme du métier qui a acquis l'image de la grille-source distordue SG$^{-2}$, telle que représentée sur la FIG. 3A, effectue :

* le comptage du nombre N1 des intersections dans l'image,
* le comptage, compte tenu de la numérisation, du nombre N2 approximatif de pixels contenus dans une zone d'intersection : chaque zone d'intersection a quatre côtés, et sa surface est donnée par le produit des épaisseurs en pixels des barreaux de grille horizontaux et verticaux dans l'image distordue, comme montré par exemple sur la FIG.4A,
* le calcul du nombre Nb recherché égal au produit du nombre d'intersections N1 dans l'image distordue par le nombre de pixels approximatif N2 dans une zone d'intersection.

Ce nombre Nb constitue le seuil Nb = N1 x N2 .A l'aide de ce seuil, on extrait les pixels appartenant aux zones d'intersection. Cette extraction consiste à retenir un nombre égal au nombre calculé Nb, parmi les pixels ayant les intensités les plus élevées après l'opération de filtrage, dans l'image rehaussée SG$^{-1}$.

A cet effet, on réalise un histogramme en comptabilisant, pour chaque niveau d'intensité, le nombre de pixels ayant cette intensité. En partant du niveau d'intensité le plus élevé, l'opération de seuillage consiste à sommer le nombre de pixels par niveau d'intensité décroissant, et à arrêter la sommation lorsque le nombre Nb seuil est atteint. Ainsi les pixels de plus haute intensité sont retenus et leur données d'adresse et d'intensité sont mémorisées.

A l'issue de cette opération, l'image réalisée à partir de la grille test n'est plus formée que de **zones brillantes** contenant un certain nombre de pixels dont l'intensité est supérieure ou égale à l'intensité correspondant au seuil Nb sur l'histogramme, **le fond étant uniformément sombre** et dépourvu des détails de barreaux que l'on voyait encore après filtrage sur l'image SG$^{-1}$ de la FIG.3B.

## II.B3/ Etiquetage des points seuillés et calcul du barycentre des zones d'intersection (FIG.3C ; FIG.2, bloc 41)

Les pixels extraits par seuillage à l'étape précédente sont regroupés par une méthode d'étiquetage. Les zones d'intersection contenant chacune quelques pixels seuillés regroupés sont identifiées, puis leur barycentre est calculé.

Par le calcul du barycentre, on ramène chaque zone d'intersection à un seul point, défini par un couple de coordonnées qui ne sont pas forcément entières puisqu'elles sont le résultat d'un calcul de barycentre d'une zone de plusieurs pixels.

En référence à la FIG.3C, les barycentres ainsi extraits constituent des points ci-après appelés **points de référence** $R_k$, où k est le nombre qui permet de numéroter chacun des points de référence **dans l'image source SG$^0$** ainsi obtenue.

A chaque $R_k$, correspond une adresse dans l'image source SG$^0$ maintenant obtenue, donnée par les coordonnées du barycentre calculé. Ces coordonnées sont notées $rx_k$ selon l'axe des x et $ry_k$ selon l'axe des y d'un **repère de coordonnées fixe** $\Omega x, \Omega y$ utilisé dans cette image source SG$^0$. Ce repère est orthogonal et ses axes coïncident respectivement avec une ligne et une colonne de pixels de cette image.

Sur la FIG.3C, les barycentres ou points de référence $R_k$ extraits sont représentés par des points noirs sur fond blanc pour la commodité du dessin, alors que dans l'exemple décrit, ils sont en réalité blanc sur fond noir.

## II.C/ ESTIMATION D'UNE PREMIERE GRILLE THEORIQUE (FIG.2, BLOC 42)

Le procédé de l'invention comprend maintenant des étapes pour construire une image cible d'une grille appelée grille théorique TG$^n$ qui représente la grille SG$^0$ de l'image source (FIG.3C) corrigée de ses distorsions géométriques.

A l'issue de ces étapes, le procédé selon l'invention fournit des fonctions de transformation, permettant de construire de manière très précise cette grille théorique TG$^n$ corrigée, à partir des données d'image de la grille source SG$^0$ ; ces données d'image sont constituées au départ par les coordonnées $rx_k$, $ry_k$ des points de référence $R_k$ dans le repère $\Omega x, \Omega y$. Selon l'invention, la grille théorique corrigée TG$^n$ est construite en se fondant sur l'hypothèse que l'image source est distordue de manière radiale autour d'un centre de distorsion par rapport à l'image cible à construire.

Pour arriver à une construction précise de cette grille théorique améliorée TG$^n$ telle que représentée sur la FIG.3G, le procédé comprend d'abord une étape mise en oeuvre dans le bloc 42 de la FIG.2, comprenant elle-même des sous-étapes pour la construction **d'une première grille théorique TG$^0$ :**

* une estimation d'un point appelé **centre de grille cible,** noté GC$^0$, localisé à une **intersection** d'un barreau horizontal et d'un barreau vertical de cette première grille théorique. Il est repéré par ses coordonnées en pixels gcx$^0$, et gcy$^0$ dans un **repère orthogonal** $\Omega x, \Omega y$ **de la première grille théorique,** dont l'axe des x est parallèle aux lignes de pixels et l'axe des y est parallèle aux colonnes de pixels, et dont l'origine correspond à l'origine $\Omega$ du repère fixe dans l'image source SG$^0$,

* une détermination de la position d'un centre optique 0C$^0$ considéré comme un centre de distorsion approximatif pour cette première grille théorique TG$^0$.

* une estimation d'un pas GM$^0$ pour cette première grille théorique, défini par les distances en pixels gmx$^0$, gmy$^0$ entre les intersections de barreaux de cette première grille cible, selon l'axe des x et selon l'axe des y, dans le repère fixe $\Omega x, \Omega y$,

* une mise en correspondance de points $TR_m^0$ de la première grille théorique avec des points de référence $R_k$ de la grille source distordue SG$^0$. La localisation de ces points $TR_m^0$ situés à l'intersection des barreaux de la première grille théorique, est définie à partir des estimations du centre GC$^0$ et du pas GM$^0$ réalisés pour cette première grille théorique.

Sur les FIG.3C et suivantes illustrant le présent exposé, on a représenté les points de référence $R_k$ l'image source par des petits ronds, et les points d'intersection $TR_m^0$ de la grille théorique par des petites croix en noir sur fond blanc, quel que soit leur niveau d'intensité réel pour la simplification des dessins.

### II.C1/ Estimation d'un centre GC$^0$ pour la première grille théorique

Cette première grille théorique est entièrement définie dès que sont déterminés un centre GC$^0$ et un pas GM$^0$. **Les barreaux de la grille théorique sont orthogonaux et régulièrement espacés.** Il faut noter que ce centre de la grille théorique pourra se trouver à n'importe quel endroit de l'image, et même, éventuellement en dehors de l'image.

Dans cette étape, l'estimation d'un centre GC$^0$ pour la première grille théorique, est effectué autour du centre de distorsion de la grille source distordue, pour mener à une estimation facile du pas GM$^0$ de cette première grille théorique TG$^0$.

En appliquant l'hypothèse des distorsions radiales, il apparaît que le centre réel de distorsion de la grille source SG$^0$ est situé dans une région de l'image source où les distorsions sont minimales.

L'estimation d'un centre $GC^0$ pour la première grille théorique comprend donc la succession d'opérations suivantes :

*   une estimation d'un point de référence de départ $R^0_k$ dans l'image de la grille source $SG^0$, proche du centre de distorsion,
*   le report de ce point de départ $R^0_k$ comme centre de grille $GC^0$ et comme centre optique approximatif $0C^0$ dans l'image de la première grille théorique $TG^0$. Le centre optique de la première grille théorique est différent du centre optique de la caméra 1, 2 de la FIG.1A.

**II.C1 a/ Estimation d'un point de référence $R^0_k$ proche du centre de distorsion dans l'image source $SG^0$ (FIG.2, bloc 42 ; FIG.4B)**

D'une manière générale toute fonction capable de fournir l'estimation d'un point de référence, noté $R^0_k$, le plus rapproché du centre de distorsion de la grille source $SG^0$, peut être utilisée. On présente ci-après une méthode simple et appropriée à mettre en oeuvre cette opération.

En référence à la FIG.4B, un point de référence $R^0_k$ de la grille source tel que représenté sur la FIG.3C est proche du centre de distorsion réel, lorsqu'il est localisé dans une région de cette grille source $SG^0$ où les distorsions sont les plus faibles. Sur la FIG.4B, on a représenté un point de référence noté $R^0_{ka}$ et un ensemble $S^0_{ka}$ de points de référence voisins entourant ce point de référence $R^0_{ka}$. L'ensemble des points $S^0_{ka}$ peut être décomposé en deux sous-ensembles de points de référence :

*   un sous-ensemble horizontal noté $HS^0_{ka}$ composé de points de référence situés sur le même barreau de grille horizontal dans l'image source, que le point de référence de départ $R^0_{ka}$,
*   un sous-ensemble vertical noté $VS_{ka}$ composé de points de référence situés sur le même barreau de grille vertical dans l'image source que le point de référence de départ $R^0_{ka}$.

On cherche à sélectionner, parmi tous les points de référence de la grille source $SG^0$ celui $R^0_k$ qui est le plus proche du centre réel de distorsion.

Pour la détermination des points de référence $R_k$, l'homme du métier avait déjà, dans l'étape de filtrage I.B1/ illustrée par la FIG.4A, effectué une détermination approximative du pas de grille source, noté $GM^{-1}$ sur la FIG.3A. Ce pas approximatif de grille source est défini pour deux distances $gmx^{-1}$ et $gmy^{-1}$ le long des axes de coordonnées $\Omega x$ et $\Omega y$ de l'image source $SG^0$.

Selon l'invention, on propose maintenant un critère d'alignement par rapport à une bande horizontale et une bande verticale de largeurs égales aux composantes horizontale et verticale du pas approximatif $GM^{-1}$ c'est-à-dire respectivement de largeur $gmx^{-1}$ et $gmy^{-1}$, ces bandes étant centrées sur le point de référence testé $R^0_{ka}$. Dans ces bandes, on sélectionne les points formant le sous-ensemble $HS^0_{ka}$ et le sous-ensemble $VS^0_{ka}$ respectivement.

De l'hypothèse radiale, il ressort que : plus le point de référence $R^0_{ka}$ testé est proche du centre de distorsion, plus les points des sous-ensembles $VS^0_{ka}$ et $HS^0_{ka}$ sont alignés, et plus nombreux sont les points de ces sous-ensembles dans chacune des bandes respectives de largeur $gmx^{-1}$ et $gmy^{-1}$ comme montré sur la FIG.4B. En référence au schéma de la FIG.4B, on propose le critère d'alignement suivant :

$$AL(ka) = \sum_{S_{ka}} \quad [(0,5\ gmx^{-1} - |rx_k - rx_{ka}|)^2 + (0,5\ gmy^{-1} - |ry_k - ry_{ka}|)^2]$$

relation dans laquelle $rx_k$, $ry_k$ sont les coordonnées d'un point de référence $R_k$ de l'un des sous-ensemble $HS^0_{ka}$ et $VS^0_{ka}$ ; et dans laquelle $rx_{ka}$, $ry_{ka}$ sont les coordonnées du point de référence testé pour former le point de référence $R^0_k$ le plus proche du centre de distorsion.

Le critère proposé $AL(ka)$ est calculé sur chaque ensemble $S^0_{ka}$ de points de référence de la grille source $SG^0$ (FIG.3C). Il apparaît que :

*   plus la mesure représentée par ce critère $AL(ka)$ est grande, et plus il existe des points appartenant à cet ensemble $S^0_{ka}$. Donc, plus il existe des points de référence de la grille source $SG^0$ suffisamment bien alignés avec le point de référence testé, pour ne pas dépasser, avec ce point $R^0_{ka}$ testé, une distance géométrique égale à la moitié de la composante du pas approximatif $gmx^{-1}$ horizontalement, et $gmy^{-1}$ verticalement,
*   ce critère est donc une description naturellement bonne d'une région peu distordue.

Dans ce calcul du critère d'alignement $AL(ka)$, on peut affecter les points de référence de l'ensemble $S^0_{ka}$ de

poids d'autant moins élevés que ces points sont plus éloignés du point de référence $R^0_{ka}$ testé.

**II.C1 b/ <u>Report du point de référence retenu</u> $R^0_k$ <u>dans la première grille théorique à construire TG$^0$</u>**

Les points de référence $R_k$ de la grille source SG$^0$ de la FIG.3C sont testés en appliquant le critère d'alignement AL(ka) proposé, et un point de référence $R^0_k$ pour lequel la mesure du critère est la plus grande est retenu. Ce point $R^0_k$ est reporté dans l'image de la première grille théorique TG$^0$ à construire. Il est alors référencé **centre GC$^0$ de la première grille théorique TG$^0$ et ses coordonnées gcx$^0$ et gcy$^0$ sont mémorisées** dans le repère $\Omega$x, $\Omega$y. On note que le centre de grille dans la grille théorique est toujours à une **intersection de barreaux.**

**Un centre optique 0C$^0$** de la première grille théorique est aussi choisi en coïncidence avec ce centre GC$^0$. Le **centre optique** de la grille théorique est ci-après défini comme **le meilleur centre des distorsions connu** dans l'étape du procédé en cours.

**I.C2/ <u>Estimation d'un pas GM$^0$ pour la première grille théorique</u>**

La valeur approximative GM$^{-1}$ du pas de grille utilisée par l'homme du métier dans les phases du procédé du début jusqu'à la sous-étape précédente d'estimation d'un centre de grille GC$^0$ pour la première grille théorique TG$^0$, doit maintenant être améliorée. A cet effet, on propose ci-après une méthode de calcul du pas de la première grille théorique effectué en deux opérations de filtrage :

* un premier filtrage pour déterminer une valeur grossière d'un pas GM$^{00}$ de la première grille théorique,
* un deuxième filtrage pour déterminer une valeur plus précise d'un pas GM$^0$ pour la construction de la première grille théorique TG$^0$.

**II.C2a/ <u>Premier filtrage pour déterminer une valeur grossière d'un pas GM$^{00}$ pour la première arille théorique (FIG.4C)</u>**

Dans la sous-étape précédente, on a réalisé l'estimation d'un centre de grille GC$^0$ pour la construction de la première grille théorique, comme le point de référence $R^0_k$ le plus proche du centre de distorsion dans l'image source SG$^0$.

En référence à la FIG.4B, à ce point de référence $R^0_k$ était associé un ensemble de points de référence $S^0_k$, décomposable en deux sous-ensembles de points de référence :

* un sous-ensemble horizontal noté HS$^0_k$ composé des points de référence situés sur le même barreau horizontal que le point de référence $R^0_k$ **dans l'image source SG$^0$,** délimité par une bande horizontale de hauteur gmy$^{-1}$ qui est la composante verticale du pas de grille approximatif GM$^{-1}$ ;
* un sous-ensemble vertical noté VS$_k$ composé des points de référence situés sur le même barreau vertical que le point de référence $R^0_k$ dans l'image source SG$^0$, délimité par une bande verticale de largeur gmx$^{-1}$ qui est la composante horizontale du pas de grille approximatif GM$^{-1}$.

En référence à la FIG.4C, on réalise le premier calcul grossier des deux composantes gmx$^{00}$ et gmy$^{00}$ d'un pas pour la première grille théorique :

* en calculant la composante gmx$^{00}$ selon l'axe des $\Omega$x du repère fixe comme le résultat du filtrage par un filtre médian appliqué sur les distances HD$^0_k$ entre les points de référence du sous-ensemble horizontal HS$^0_k$,
* en calculant la composante gmy$^{00}$ selon l'axe $\Omega$y du repère fixe comme le résultat du filtrage par un filtre médian appliqué sur les distances entre les points de référence du sous-ensemble vertical HS$^0_k$.

A cet effet, on ordonne les points de référence dans le sous-ensemble horizontal HS$^0_k$. On fait de même dans le sous-ensemble VS$^0_k$ non représenté ; puis on calcule les valeurs des distances entre ces points de référence, et on ordonne ces valeurs de la plus petite à la plus grande. Ensuite, on applique un filtre médian sur les valeurs ordonnées dans les ensembles HS$^0_k$ et VS$^0_k$ horizontalement et verticalement. Le filtre médian retient la valeur située au milieu des valeurs ordonnées horizontalement pour gmx$^{00}$ ; et de même verticalement pour gmy$^{00}$.

Les filtres médians ont pour avantage de fournir des résultats robustes aux erreurs de localisation des points traités. En particulier le résultat reste correct, dans la bande horizontale ou verticale de points traités, même lorsqu'un point est manquant parce qu'il n'a pas été extrait, ou bien lorsqu'un point extrait existe par erreur. Les filtres médians donnent des résultats meilleurs que les calculs simples de moyennes.

Les mesures effectuées dans cette première phase de filtrage constituent un couple robuste gmx$^{00}$, gmy$^{00}$

**pour une valeur grossière du pas** dans la construction de la première grille théorique. Cette valeur grossière n'a cependant pas la précision suffisante pour construire la première grille théorique. C'est pourquoi, on procède ensuite à un second filtrage pour fournir une valeur du pas de grille suffisamment précise pour débuter cette construction.

**II.C2 b/ Deuxième filtrage pour déterminer une valeur plus précise d'un pas $GM^0$ pour la construction de la première grille théorique (FIG.2, bloc 42 ; FIG.4D)**

En référence à la FIG.4D, on sélectionne un sous-ensemble $S'^0_k$ de 8 points de référence situés autour du point de référence $R^0_k$ retenu comme le plus proche du centre de distorsion dans l'image source $SG^0$. La recherche de chacun de ces voisins est faite en utilisant la valeur du pas approximatif $GM^{00}$ déterminée dans le premier calcul. Chacun de ces 8 voisins est identifié comme le point de référence correspondant le mieux à ce premier calcul.

De nouveau, on applique un filtre médian qui opère maintenant sur les valeurs des distances entre les points de référence ainsi définis. On utilise dans ce deuxième filtrage 6 intervalles horizontaux $HS^0_k$ et 6 intervalles verticaux $VS^0_k$ ; on ordonne ces intervalles par valeurs croissantes et on détermine par filtrage médian les nouvelles valeurs des composantes horizontale $gmx^0$ et verticale $gmy^0$ du pas de grille, notée $GM^0$, situées au milieu de ces valeurs ordonnées en horizontal et en vertical respectivement, qui sont plus précises que les valeurs déterminées par le filtrage de l'étape précédente, du fait que le filtrage est uniquement réalisé dans une région de l'image source proche du centre de distorsion, et donc présentant les plus faibles distorsions.

On note que, dans chacun de ces deux filtrages, des points de référence utilisés pour passer les filtres médians peuvent être erronés ou manquants. Mais du fait que ces premier et second filtrages sont basés sur la sélection des valeurs médianes des intervalles considérés, les résultats ne sont pas notablement affectés.

Il en résulte que l'on dispose à la fin de cette sous-étape en deux opérations :

* d'une mesure robuste,
* et d'une mesure suffisamment précise d'un pas $GM^0 = (gmx^0, gmy^0)$, pour la construction de la première grille théorique. **Ces données sont mémorisées.**

Dans la méthode selon l'invention, la robustesse des données d'image de départ pour construire la première grille théorique, à savoir :

* le centre de grille $GC^0$ déterminé par les coordonnées d'un point de référence $R^0_k$ proche du centre de distorsion,
* le centre optique $OC^0$ également déterminé par $R^0_k$
* le pas de grille $GM^0$,

sont très importantes, car l'invention vise à fournir une méthode **automatique** de détermination des fonctions de correction.

**II.C3/ Estimation de premiers couples $P^0_k$ formés de points de référence $R_k$ de la grille source $SG^0$ et de points $TR^0_m$ de la première arille théorique $TG^0$ (FIG.2, bloc 42)**

Ayant maintenant la connaissance,

* des coordonnées $gcx^0$, $gcy^0$ du centre de grille $GC^0$,
* des composantes $gmx^0$, $gmy^0$ du pas de grille $GM^0$

dans le repère fixe $\Omega x$, $\Omega y$, on construit la première grille théorique en plaçant, dans ce repère fixe, les intersections de ses barreau notés $TR^0_m$, où m est un indice qui permet de numéroter chaque point d'intersection dans la grille théorique..

**Dans cette étape, on travaille sur l'image source $SG^0$** des points de référence telle que représentés sur la FIG.3C, **et sur la première grille théorique $TG^0$** comme définie plus haut. En partant de ces deux images $SG^0$ et $TG^0$, on détermine pour la première fois des couples notés $P^0_k$, de points correspondants formés d'un point de référence $P_k$ et d'un point de grille théorique $TR^0_m$.

On écrit cette correspondance sous la forme :

$$P^0_k = [R_{f(k)}, TR^0_{g(k)}]$$

où f et g sont des fonctions de correspondance entre les points de référence $R_k$ de grille source et les points d'inter-

section recherchés $TR^0_m$ de la grille théorique. En effet, rien n'indique que le point $TR^0_m$ trouvé dans la grille théorique $TG^0$ pour correspondre à $R_k$ dans la grille source $SG^0$ aura le même numéro, et donc le même indice que le point de référence Rk.

Par exemple $R_k$ dans $SG^0$ pourrait avoir le numéro 100 (k = 100) alors que $TR^0_m$ dans $TG^0$ pourrait avoir le numéro 200 (m = 200). Dans ce cas, on écrirait que f(k) = g(k), c'est-à-dire que f(100) = g(200) lorsque les points $R_k$ et $TR^0_m$ sont appariés, et on déterminerait ainsi une relation de mise en correspondance des points du couple $P^0_k$. Ce pourrait être par exemple f(100) = g(200) = 120.

Dans la région de faible distorsion proche du centre de grille $GC^0$, l'opération de première mise en correspondance consiste à sélectionner les couples $P^0_k$ formés chacun d'un point de référence $R_{f(k)}$ et d'un point $TR^0_{g(k)}$ de la première grille théorique, le plus proche l'un de l'autre par un critère de proximité simple.

Au fur et à mesure que l'on s'éloigne du centre, cette façon d'opérer ne peut plus être utilisée, car les points des couples deviennent de plus en plus éloignés l'un de l'autre, et vers les bords des images source $SG^0$ et cible $TG^0$ considérées, on se trouve dans la situation où le point de grille théorique doit être mis en correspondance avec un point de référence sélectionné parmi plusieurs points de référence qui semblent tous a priori de bons candidats.

Dans le but de résoudre ce problème, on part donc du centre de grille $GC^0$, et on forme le premier couple dans cette première grille théorique constitué du centre de grille $GC^0$ situé à une intersection de barreaux, et avec le point de référence $R^0_k$ qui coïncide avec $GC^0$, puis on construit des seconds couples $P^0_k$ autour de ce centre de grille $GC^0$. Ensuite, en s'appuyant sur les connaissances acquises de ces premier et second couples $P^0_k$, on construit de nouveaux couples de proche en proche, en progressant pas à pas du centre de grille $GC^0$ vers les bords par une méthode décrite ci-après.

Selon cette méthode, pour construire pour la première fois des couples $P^o_k$ en progressant pas à pas du centre $GC^0$ vers les bords des images, à chaque pas, on définit une couronne rectangulaire de taille croissante autour du centre $GC^0$.

Ainsi, dans à la fois la grille source $SG^0$ et la première grille théorique $TG^0$, avec le point de référence $R^o_k$ et le centre de grille $GC^0$ en coïncidence :

* la première couronne se compose du centre de grille $GC^0$ lui-même,
* la seconde couronne rectangulaire se compose de ses 8 voisins directs de $GC^0$,
* la troisième couronne rectangulaire se compose de ses 16 seconds voisins de $GC^0$.

Sur la FIG.4E, les points $TR^0_{g(k)}$ de la grille théorique sont représentés par des croix quand ils sont suffisamment éloignés des points de référence $R_{f(k)}$, eux-mêmes représentés par des ronds, pour en être distingués.

Plus la couronne traitée est éloignée du centre de grille $GC^0$, et plus les couples $P^0_k$ sont formés de points distincts et distants.

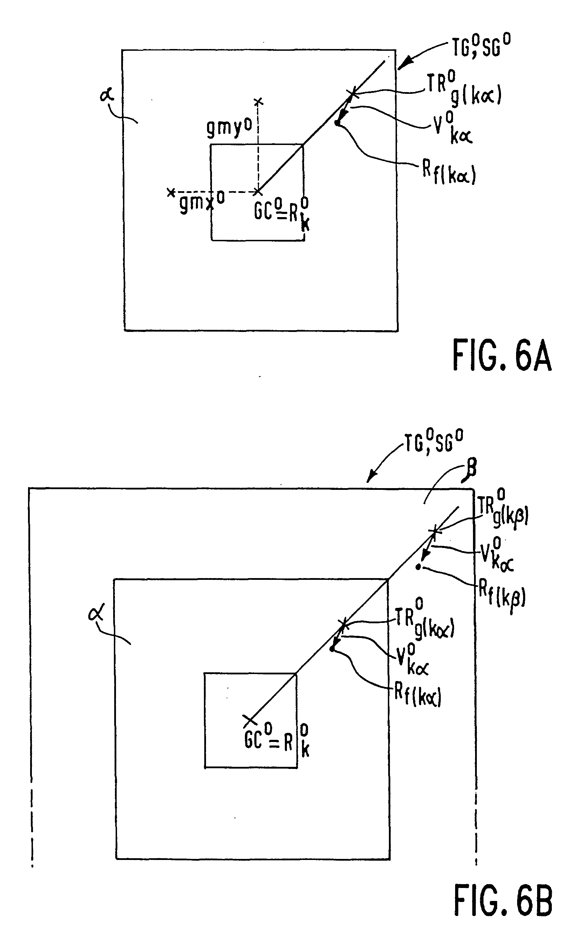

En référence avec la FIG.6A, dans une couronne rectangulaire courante α, après la mise en correspondance d'un point de référence $R_{f(k\alpha)}$ et d'un point $TR^0_{g(k\alpha)}$ de grille théorique, on trace un rayon passant par le centre de grille $GC^0$ et par le point de grille $TR^0_{g(k\alpha)}$ testé dans cette couronne courante α. Et on mesure le vecteur d'erreur :

$$V^0_{k\alpha} = TR^0_{g(k\alpha)}, R_{(fk\alpha)}$$

Ce vecteur $V^0_{k\alpha}$ constitue l'erreur de mise en correspondance des points du couple $P^0_{k\alpha}$ dans cette couronne α, erreur due à la distorsion.

En référence à la FIG.6B, dans une couronne β suivante plus éloignée du centre de grille $GC^0$, un point de référence est recherché dans l'image source $SG^0$ pour correspondre à un nouveau point testé $TR^0_{g(k\beta)}$ de la première grille théorique $TG^0$. A cet effet, on a mémorisé les vecteurs d'erreur $V^0_{k\alpha}$ relatifs à tous les couples $P^0_{k\alpha}$ de la couronne précédente α. On trace le rayon passant par le centre $GC^0$ et par le point testé $TR^0_{g(k\beta)}$. On recherche dans la couronne précédente α le point de grille théorique $0TR^0_{g(k\alpha)}$ le plus près de ce rayon ($GC^0, TR^0_{g(k\beta)}$) que l'on vient de tracer. Ce point de grille $TR^0_{g(k\alpha)}$ correspondait à un point de référence $R_{f(k\alpha)}$ par le vecteur d'erreur 9 $V^0_{k\alpha}$ défini plus haut. Ce vecteur d'erreur $V^0_{k\alpha}$ est alors appliqué au nouveau point testé $TR^0_{g(k\beta)}$ pour estimer le point de référence correspondant. Le point de référence $R_{f(k\beta)}$ le plus proche de cette estimation est retenu s'il est trouvé dans une fourchette de distance acceptable défini par les composantes du pas de grille théorique $gmx^0$, $gmy^0$. Un nouveau couple $P^0_{k\beta}$ est alors formé dans la mesure où un point de référence $R_{f(k\beta)}$ existe.

Un nouveau vecteur d'erreur $V^0_{k\beta}$ est alors mémorisé pour servir d'entrée au traitement des points de la couronne suivante.

Ainsi, on a défini un critère de proximité particulier selon lequel à partir du vecteur d'erreur entre les points d'un couple dans une couronne, on forme les couples dans la couronne suivante plus éloignée du centre, et, on mesure le nouveau vecteur d'erreur qui a grandi dans cette couronne suivante. Et à partir du vecteur d'erreur mesuré dans la couronne précédente, ainsi de proche en proche, la procédure est répétée jusqu'à ce que la taille des couronnes soit égale à la taille de l'image.

## II-D/ CONSTRUCTION D'UNE GRILLE THEORIQUE PAR UN PROCEDE D'ITERATION FONDE SUR L'HYPOTHESE DES DISTORSIONS RADIALES (FIG.2, blocs 43 à 46)

La méthode selon l'invention consiste, à partir des caractéristiques de la première grille théorique $TG^0$, à construire maintenant la meilleure grille théorique possible, c'est-à-dire à construire une grille théorique $TG^n$ aussi bien corrigée en distorsion que possible.

Pour résoudre ce problème la méthode selon l'invention est itérative. A chaque itération, cette méthode comprendra les étapes de :

* calcul d'un polynôme $F^n$ de correction radiale, mis en oeuvre dans le bloc 44),
* calcul de l'erreur $E^n$ de modélisation et mémorisation de l'optimum, mis en oeuvre dans le bloc 45,
* modification du centre optique $OC^n$ mise en oeuvre dans le bloc 46,
* estimation d'une nouvelle grille théorique $TG^n$, mis en oeuvre dans le bloc 43.

Dans les étapes précédentes, on avait affecté d'un indice zéro (0), placé en exposant, toutes les notations relatives aux premières estimations du centre $GC^0$, du pas $GM^0$ et des couples $P_k^0$ de points de la première grille théorique $TG^0$ à construire. Chaque itération sera repérée par un indice placé en exposant, cet indice croissant à partir de zéro à chaque nouvelle itération. Par exemple, à l'itération n, le centre de grille est $GC^n$, le centre optique est $OC^n$, le pas de grille est $GM^n$, les couples sont $P_k^n$ etc.

En référence avec la FIG.2, cette méthode itérative forme une boucle.

En supposant connus les éléments de construction d'une première grille théorique telle que $TG^0$, définie par son centre de grille $GC^0$, son pas $GM^0$, son centre optique $OC^0$,

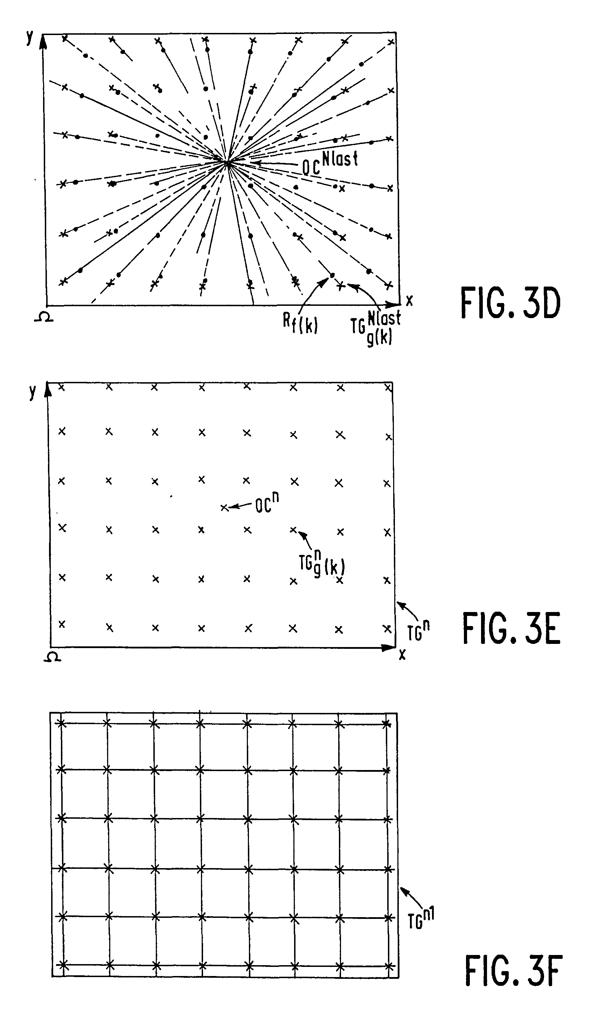

* on calcule d'abord, dans le bloc 44, un polynôme $F^0$ de correction des distorsions radiales,
* on calcule ensuite dans le bloc 45, une erreur $E^0$ de modélisation,
* on modifie alors, dans le bloc 46 fermant la boucle, la position du centre optique approximatif qui était $0C^0$ dans la première grille théorique et que l'on déplace en $OC^1$ pour chercher à le rapprocher d'une position idéale où l'hypothèse radiale est vérifiée, c'est-à-dire où les points de grille théorique sont alignés avec les points de référence et avec le centre optique, comme montré sur la FIG.3D,
* ayant modifié le centre optique maintenant noté $OC^1$, on réestime dans le bloc 43 les éléments de construction d'une seconde grille théorique $TG^1$ définie par son centre de grille $GC^1$, son pas de grille $GM^1$ ; on construit cette seconde grille théorique $TG^1$ au moyen de ces nouveaux élément $GC^1$ et $GM^1$, puis toujours dans ce bloc 43, on réalise la mise en correspondance des nouveaux points de grille théorique $TR^1_{g(k)}$ et des points de référence de l'image source $SG^0$,
* à ce moment là, on poursuit le procédé d'itération dans le bloc 44 par le calcul du polynôme $F^1$ de correction des distorsions radiales, puis dans le bloc 45 par le calcul de l'erreur $E^1$ de modélisation et on reboucle l'itération dans le bloc 46 par la modification du centre optique qui devient $OC^2$, etc.

On va se placer maintenant dans l'itération n, en sortie du bloc 46 de la boucle, où l'on vient de modifier la position du centre optique, qui devient $OC^n$.

On porte alors cette connaissance du nouveau centre optique $OC^n$ dans le bloc 43 de la chaîne d'itération où l'on dispose encore seulement des caractéristiques de la grille théorique $TG^{n-1}$ à l'itération n-1, et où l'on va calculer des nouvelles caractéristiques de grille théorique, un nouveau centre de grille $GC^n$ et un nouveau pas de grille $GM^n$ pour construire la nouvelle grille théorique à l'itération n.

Dans ce même bloc 43, on effectuera ensuite la mise en correspondance des nouveaux points $TR^n_{g(k)}$ de grille théorique et des points de référence $R_{f(k)}$ pour former des nouveaux couples $P_k^n$.

## II.D1/ Estimation précise du centre de grille $GC^n$, et du pas de grille $GM^n$ (FIG.2, bloc 43)

En référence à la FIG.2, dans le bloc 43, à l'itération n, on part de la connaissance du centre optique $OC^n$, nouvellement mis-à-jour dans le bloc 46 de la boucle d'itération.

On part également des couples de points $P_k^{n-1}$, qui sont notées :

$$P_k^{n-1} = Rf_{(k)}, \, TG^{n-1}g_{(k)}$$

où les indices en exposant indiquant le numéro de l'itération n-1 où ces valeurs ont été déterminées.

On part aussi de la connaissance à la dernière itération n-1 :

* du centre de grille $GC^{n-1} = (gcx^{n-1}, gcy^{n-1})$,
* du pas de grille théorique $GM^{n-1} = (gmx^{n-1}, gmy^{n-1})$

On cherche à déterminer maintenant à l'itération n :

* un centre de grille amélioré $GC^n = (gcx^n, gcy^n)$
* et un pas de grille amélioré $GM^n = (gmx^n, gmy^n)$,

Ces paramètres définissent une nouvelle mise-à-jour des points de grille $TR^n_{g(k)}$. Toutes les caractéristiques de grille mises à jour sont calculées en pixels dans le repère de coordonnées fixe $\Omega x, \Omega y$.

A cet effet, on utilise l'hypothèse de base appelée **hypothèse radiale** selon laquelle, si le centre optique $OC^n$ est correct, alors les distorsions qui sont radiales par nature, ont pour effet de déplacer les points de la grille de la mire réelle M, le long de rayons passant par le centre $OC^n$ et par les points de référence $R_{f(k)}$ comme montré sur la FIG.3D.

Cela indique que les points $TR^n_{g(k)}$ de la g rille théorique devraient se trouver près de ces rayons. C'est-à-dire que la grille théorique la meilleure doit être calculée de manière à minimiser la distance géométrique entre les points de la grille théorique $TR^{n-1}_{g(k)}$ à l'itération n-1 et un rayon passant par le centre optique $OC^0$ estimé dans cette boucle d'itération n et lesdits points de référence $R_{f(k)}$.

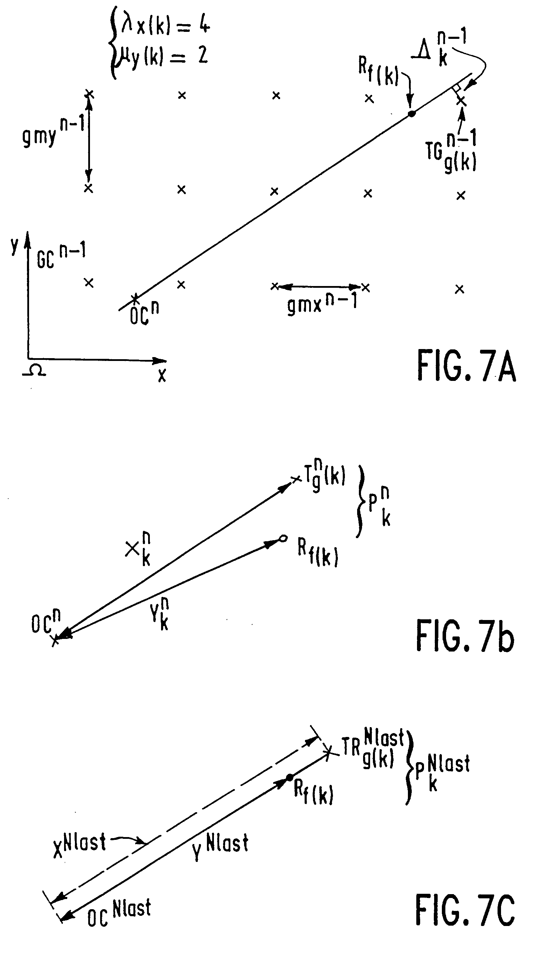

En référence à la FIG.7A, on a représenté le centre optique $OC^n$ venant du bloc 46, le point de grille $TR^{n-1}_{g(k)}$ mémorisé à l'itération précédente n-1, le point de référence correspondant $R_{f(k)}$ formant à l'itération précédente n-1 un couple $P^{n-1}_k$ avec ledit point de grille $TR^{n-1}_{g(k)}$. On a tracé le rayon $OC^n$ - $R_{f(k)}$, et la distance géométrique $\Delta^{n-1}_k$ entre le point de grille $TR^{n-1}_{g(k)}$ et le rayon $OC^n$ - $R_{f(k)}$.

Dans cette étape, à l'itération n, on cherche à minimiser cette distance géométrique $\Delta^{n-1}_k$, pour améliorer l'alignement du centre optique $OC^n$ et des points des couples formés des points de grille et des points de référence correspondants. Plus précisément, on définit une distance :

$$\Delta^n_k = [TR^{n-1}_{g(k)}, (OC^n, R_{f(k)})]$$

qui est la distance géométrique mémorisée à l'itération n-1, entre un point $TR^{n-1}_{g(k)}$ de la grille théorique $TG^{n-1}$ et le rayon passant par le centre $OC^n$ et le point de référence correspondant $R_{f(k)}$.

On peut écrire que, dans le repère $\Omega x, \Omega y$ fixe :

$$TR^{n-1}_{g(k)} = [(gcx^{n-1} + gmx^{n-1} \times \lambda_{x(k)}), (gcy^{n-1} + gmy^{n-1} \times \mu_{y(k)})]$$

Dans cette formule les points de grille $TR^{n-1}_{g(k)}$ ne dépendent que des composantes $gmx^{n-1}$, $gmy^{n-1}$ du pas de grille théorique et des composantes $gcx^{n-1}$, $gcy^{n-1}$ du centre de grille théorique.

Dans cette formule également, les paramètres $\lambda_{x(k)}$ et $\mu_{y(k)}$ définissent respectivement le nombre de pas de grille théorique respectivement $gmx^{n-1}$ et $gmy^{y-1}$ dont il faut se déplacer parallèlement aux axes $\Omega x, \Omega y$, pour trouver le point de grille $TR^{n-1}_{g(k)}$ à partir du centre de grille théorique de coordonnées $gcx^{n-1}$, $gcy^{n-1}$.

Par exemple, pour réaliser la FIG.7A, on a supposé que le point de grille était à $\lambda_{x(k)} = 4$ pas de grille en horizontal et à $\mu_{y(k)} = 2$ pas de grille en vertical à partir de grille $GC^{n-1}$, lui-même repéré par ses composantes $gcx^{n-1}$, $gcy^{n-1}$ en pixels dans le repère fixe $\Omega x, \Omega y$.

Ensuite, le centre $GC^n$ et le pas de grille $GM^n$ sont calculés à cette itération n dans le bloc 43 en effectuant la minimisation d'un critère noté $\Phi^n$, appelé ci-après critère radial, qui exprime l'hypothèse radiale énoncée plus haut, selon laquelle la meilleure grille théorique possible correspond à des distances $\Delta^n_k$ plus petites à l'itération n qu'à itération n-1.

Ce critère radial s'écrit :

$$\Phi^n(gcx^n, gcy^y, gmx^n, gmy^n) = \sum_k (\Delta^n_k)^2$$

Pour que ce critère $\Phi^n$ ait une solution non ambiguë, il convient d'exclure la solution où le pas de grille est nul et où le centre de grille est confondu avec le centre optique, car dans tous ces cas le critère $\Phi^n$ est nul, et aucune solution constructive ne peut être trouvée. Par contre, si le pas de grille est contraint d'avoir une grandeur raisonnable, et si le centre de grille est différent du centre optique, alors le problème est bien posé.

Toute méthode de minimisation, menant à une solution non singulière, est bonne et peut être utilisée. On propose selon l'invention une méthode incluant les étapes suivantes :

* départ avec une valeur raisonnable du pas de grille $GM^{n-1}$, en posant dans le critère radial $\Phi^n$, les composantes $gmx^{n-1}$ et $gmy^{y-1}$ du pas de grille fixes,
* minimisation du critère radial $\Phi^n$, par rapport au centre de grille $GC^{n-1}$ : les composantes $gmx^{n-1}$, $gmy^{n-1}$ du pas étant fixes, on dérive la formule du critère radial $\Phi^n$ par rapport aux deux coordonnées variables $gcx^{n-1}$, $gcy^{n-1}$ du centre de grille $GC^{n-1}$. Ce calcul de dérivées fournit deux formules explicites qui donnent des valeurs de coordonnées $gcx^n$ et $gcy^n$ pour mettre à jour le centre de grille $GC^n$ à cette itération n,
* minimisation du critère radial $\Phi^n$, par rapport au pas de grille $GM^{n-1}$ : on fixe maintenant les coordonnées $gcx^n$ et $gcy^n$ du centre de grille qui viennent d'être calculée, et on dérive la formule du critère radial $\Phi^n$ par rapport aux composantes du pas de grille variables $gmx^{n-1}$, $gmy^{n-1}$. Ce calcul de dérivées fournit à nouveau deux formules explicites qui donnent des valeurs de composantes $gmx^n$ et $gmy^n$ pour mettre à jour le pas de grille $GM^n$ à cette itération n,
* répétition de ces opération autant de fois que nécessaire jusqu'à l'obtention d'une précision requise.

## II-D2/ Estimation à l'itération n des couples des points de référence-points de grille théorique correspondants (FIG.2, bloc 43)

Cette opération est faite en pratiquant exactement la même procédure que pour la première grille théorique à l'exception que l'on utilise les valeurs du centre et du pas $GC^n$ et $GM^n$, respectivement mises à jour à l'itération n lors de l'étape précédente.

A l'itération n, dans le bloc 43 de la FIG.2, on dispose maintenant dans le repère fixe $\Omega x$, $\Omega y$, de :

* une mise à jour des coordonnées du centre de grille $GC^n = (gcx^n, gcy^n)$
* une mise à jour des composantes du pas de grille $GM^n = (gmx^n, gmy^n)$
* la position du centre optique $OC^n$ provenant du bloc 46.

Ces caractéristiques permettent de construire une nouvelle grille théorique $TG^n$ mise à jour, à mailles rectangulaires régulièrement espacées, comme sur la FIG.3E.

On réalise alors la procédure de mise en correspondance des points de référence $R_{f(k)}$ de la grille source $SG^0$ et des points $TG^n_{g(k)}$ de la nouvelle grille théorique $TG^n$ pour former des nouveaux couples $P^n_k$. En effet, du fait du changement du centre et du pas de la nouvelle grille théorique, le point de référence qui avait été trouvé à l'itération n-1 pour former un couple avec un point de grille donné peut maintenant ne plus être le meilleur candidat. Une nouvelle mise en correspondance doit donc être effectuée.

On réalise alors cette procédure de nouvelle mise en correspondance des points de grille de la grille théorique $TG^n$ et des points de référence de l'image source en considérant des couronnes rectangulaires croissant autour du centre de grille $GC^n$ localisé par ses nouvelles coordonnées $(gcx^n, gcy^n)$, et en formant les couples $P^n_k$ par progression pas à pas, couronne après couronne, en appliquant le critère de proximité proposé dans l'exposé de la construction de la première grille théorique $TG^0$.

## II-E/ CALCUL D'UN POLYNOME DE CORRECTION RADIALE (FIG.2, bloc 44)

En partant des couples $P^n_k$ déterminés à l'étape précédente de la chaîne qui constitue l'itération n, on calcule des couples de rayons :

* un premier rayon $X^n_k$ ayant pour valeur la longueur du segment qui lie le centre optique $OC^n$ et point de grille $TG^n_{g(k)}$ d'un de ces couples $P^n_k$ ;
* un second rayon $Y^n_k$ ayant pour valeur la longueur du segment qui lie le centre optique $OC^n$ et le point de référence $R_{f(k)}$ de ce couple $P^n_k$.

En référence à la FIG.7B, ces rayons s'expriment par :

$$X^n_k = (OC^n, TR^n_{g(k)})$$

$$Y_k^n = (OC^n, R_{f(k)})$$

où $(TR_{g(k)}^n, R_{f(k)}) = P_k^n$. Ces couples de rayons sont calculés pour chaque couple $P_k^n$ de la grille théorique $TG^n$ nouvellement mise à jour.

On calcule ensuite une fonction polynomiale $F^n$ qui relie au mieux les rayons $Y_k^n$ 1 aux rayons $X_k^n$ 2 de chaque couple $P_k^n$.

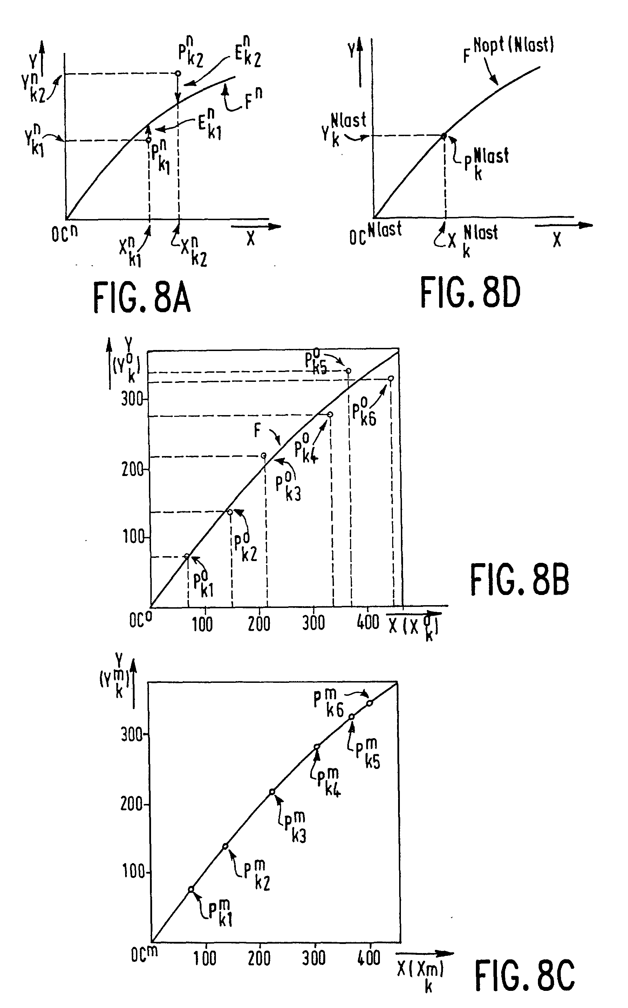

En référence à la FIG.8A, on a représenté sur un graphe des rayons $X_k 1^n$, $X_k 2^n$, en abscisse X, et des rayons $Y_k 1^n$, $Y_k 2^n$ en ordonnées Y, formant des couples $P_k 1^n$, $P_k 2^n$ respectivement, le centre optique $OC^n$ étant placé à l'origine des axes de coordonnées graduées en pixels. Ces couples $P_k 1^n$, $P_k 2^n$ forment, sur ce graphe, des points symbolisés par des petits ronds, qui se répartissent de part et d'autre de la courbe représentative de la fonction polynomiale F" recherchée. Sur la FIG.8A on s'est limité à la représentation de deux couples de rayons pour la clarté du dessin.

En référence à la FIG.8B, on a représenté sur un graphe dont les axes de coordonnées X et Y sont gradués en nombre de pixels, six couples $0 P_k 1^0$, $P_k 2^0$, $P_k 3^0$, $P_k 4^0$, $P_k 5^0$, $P_k 6^0$ formés en relation avec la première grille théorique $SG^0$. Sur ce graphe, le centre optique $OC^0$ est porté à l'origine des axes de coordonnées, les rayons $X_k^0$, $Y_k^0$ sont portés sur l'axe des abscisses et des ordonnées respectivement. A cette itération numéro zéro, les points représentant les couples $P_k^0$ forment un nuage de points autour de la courbe représentative de la fonction $F°$ trouvée pour relier les rayons $X_k^n$, $Y_k^n$.

En référence à la FIG.8C, on a représenté sur un graphe dont les axes de coordonnées X et Y sont gradués en nombre de pixels six autres couples $P_k 1^m$, $P_k 2^m$, $P_k 3^m$, $P_k 4^m$, $P_k 5^m$, $P_k 6^m$ formés en relation avec une grille théorique $SG^m$, à une itération numérotées m où la correction des distorsions est devenue pratiquement parfaite. Dans ce cas l'ensemble des couples $P_k^m$ constitue une courbe lissée correspondant à la fonction polynomiale $F^m$.

En référence aux FIG.8A à 8C, on a trouvé que la fonction $F^n$ la mieux appropriée à relier les couples de rayons $X_k^n$, $Y_k^n$ à l'itération n, était un polynôme de degré 5 ou 6 ; un polynôme de degré 3 par exemple ne suffit pas à résoudre ce problème. Il est apparu que la correction des distorsions radiales nécessitait le calcul d'un polynôme d'ordre supérieur à 3.

En référence à la FIG.8A, à l'itération n, on peut mesurer pour chaque rayon $X_k 1^n$, $X_k 2^n$... l'erreur respectivement $E_k 1^n$, $E_k 2^n$... qui existe entre les rayons $Y_k 1^n$, $Y_k 2^n$... et la fonction polynomiale $F^n$ qui relie au mieux les points de couples $P_k 1^n$, $P_k 2^n$.... Sur l'ensemble des couples $P_k^n$ de la grille théorique $TG^n$, à l'itération n, cette erreur appelée ci-après erreur de modélisation $E^n$ s'écrit :

$$E^n = \sum_k \{[\, Y_k^n - F^n(X_k^n)\,]^2\}$$

Il est important de noter que le polynôme **$F^n$, ci-après appelé polynôme de correction radiale,** constitue à l'itération n, **une formule de transformation qui permet de passer :**

*    **d'un point $TR_{g(k)}^n$ de la grille théorique corrigée,**
*    à un point de référence $R_{f(k)}$ de la grille source distordue.

Ce polynôme $F^n$ peut être décomposé en deux composantes rectangulaires $F_x^n$ et $F_y^n$.

## II-F/ CALCUL DE L'ERREUR DE MODELISATION (FIG.2, bloc 45)

En référence à la FIG.2, dans la chaîne qui constitue l'itération n, à l'étape symbolisée par le bloc 45, on calcule le meilleur polynôme de correction radiale $F^n$ pour minimiser l'erreur de modélisation $E^n$, par une opération de régression linéaire classique.

Une erreur de modélisation $E^n$ est calculée à chacune des itérations de 0 à, par exemple, 10. Et ces erreurs de modélisation $E^0$, $E^1$... $E^{10}$ sont mémorisées. Parmi les différentes erreurs de modélisation calculées au cours des 10 cycles d'itération pris comme exemple, l'une d'elle, à une itération numérotée Nopt, se révèle inférieure aux autres erreurs calculées aux itérations antérieures et éventuellement aux itérations ultérieures.

Cette erreur minimale $E^{Nopt}$ est mémorisée en même temps que le polynôme de correction radiale $F^{Nopt}$, ou bien ses composantes rectangulaires $F_x^{Nopt}$, $F_y^{Nopt}$.

**I-G/ MODIFICATION DU CENTRE OPTIQUE DE LA GRILLE THEORIQUE (FIG.2, bloc 46)**

L'erreur de modélisation $E^n$ calculée précédemment à l'itération n, dans la méthode selon l'invention basée sur l'hypothèse radiale, dépend fortement de la position $OC^n$ trouvée pour le centre optique, qui devient idéal lorsqu'il est au centre des distorsions.

Dans la chaîne d'itération représentée sur la FIG.2, on trouve une boucle concrétisée par le bloc 46, qui reçoit en entrée les données du bloc 45 de calcul d'énergie d'erreur et qui fournit en sortie, au bloc 43, un centre optique modifié $OC^{n+1}$ pour calculer une nouvelle grille théorique $TG^{n+1}$ dans une nouvelle itération n+1.

On rappelle que selon l'invention, la minimisation de l'énergie d'erreur $E^n$ forme la solution du problème de correction des distorsions fondé sur l'hypothèse radiale.

A cet effet, à chaque itération, de 0 à 10 par exemple, la position du centre optique $OC^n$, repéré dans la grille théorique $TG^n$, par ses coordonnées dans le repère fixe $\Omega x$, $\Omega y$,

$$OC^n = (ocx^n, ocy^n)$$

est modifiée pour coopérer à minimiser l'erreur de modélisation $E^n$. La meilleure position du centre optique $OC^n$ pour obtenir cette minimisation peut être recherchée de plusieurs manières.

Dans une première méthode, une zone de recherche large est définie autour du centre optique de départ que l'on avait noté $OC^0$ à l'itération zéro. Au cours de chaque itération, on teste un des points de cette zone de recherche large, pour constituer un centre optique. On réalise autant d'itérations que de points à tester dans la zone de recherche large (FULL SEARCH). On retient finalement comme centre optique celui qui correspond à l'erreur de modélisation la plus faible.

Une seconde méthode, moins coûteuse en temps de calcul, est fondée sur le calcul de gradients. A deux itérations successives, une première localisation, puis une seconde localisation sont essayées, dans une direction donnée à partir du premier centre optique $0C^0$. Selon que ces premiers essais conduisent à une diminution ou à une augmentation de l'erreur de modélisation $E^n$, la meilleure position du centre optique continue à être recherchée dans la même direction et le même sens, ou bien dans la même direction et en sens opposé. Puis d'autres directions sont essayées faisant un angle donné avec la première direction et finalement on retient l'itération où, dans une direction et un sens donné, on a trouvé le meilleur centre optique pour minimiser l'erreur de modélisation.

On mémorise le numéro Nlast de l'itération à laquelle on a trouvé la position de ce centre optique la meilleure pour minimiser l'erreur de modélisation.

**II-H/ SORTIE DE LA CHAINE D'ITERATION**

Dans ces conditions les meilleures conditions de mise à jour en sortie du bloc 45 représenté sur la FIG.2 correspondent à une itération où l'on fait coopérer les conditions trouvées à Nopt et les conditions trouvées à Nlast. Cette itération devient la dernière itération : elle est numérotée Nopt (Nlast). La meilleure fonction polynomiale correspondante, pour minimiser l'erreur de modélisation, est alors notée : $G = F^{Nopt(Nlast)}$ et ses composantes rectangulaires sont deux polynômes notés :

$$G_X = F_X^{Nopt(Nlast)}(x, xy)$$

$$G_Y = F_Y^{Nopt(Nlast)}(y, xy)$$

Ces composantes sont des polynômes à deux coordonnées car chacun doit être appliqué à un point couple $P_k^n$ en coordonnées cartésiennes.

En référence à la FIG.7C et à la FIG.3D, il apparaît qu'après les opérations d'itérations qui ont mené à la détermination des conditions correspondant à la dernière itération NOpt (Nlast) le centre optique a maintenant une position : $OC^{Nlast}$ et les points de grille $TR_{g(k)}^{Nlast}$ et de référence $R_{f(k)}$ formant les couples $p_k^{Nlast}$ sont alignés au mieux sur un même rayon.

En référence à la FIG.8D, les points de couples $P_k^{Nlast}$ sont sur la courbe lissée représentant la fonction polynomiale $F^{Nlast(Nopt)}$. Une grille théorique idéale correspondant à ces conditions est montrée sur les FIG.3F et 3G, $TG^{n1}$ et $TG^{n2}$.

Une fois que la fonction polynomiale G, ou bien les composantes $G_X$ et $G_Y$ ont été calculées, TOUTES LES ETAPES PRECEDENTES SONT TERMINEES DEFINITIVEMENT.

La connaissance des fonctions G, ou $G_X$, $G_Y$ est suffisante pour assurer la correction des distorsions optiques de toute image enregistrée par la caméra 2 et son système de prise de vue 1 (FIG.1).

### III. CORRECTION DES DISTORSIONS OPTIQUES DANS UNE IMAGE (FIG.1, sous-ensemble 47 ; et FIG.2, sous-ensemble 47)

Comme on l'a dit précédemment, les composantes $G_X$ et $G_Y$ sont des formules de transformation qui font passer de l'espace rectifié noté image cible TI, vers l'espace distordu noté image source SI d'origine. Dans l'image cible à construire TI, les coordonnées de chaque pixel $x_{TI}$ et $y_{TI}$ dans le repère fixe $\Omega x$, $\Omega y$, sont mémorisées. L'image TI est alors balayée pixel par pixel, par exemple par balayage vidéo usuel.

La valeur de l'intensité ou niveau de lumière monochromatique, ou niveau de gris qui doit être attribué au pixel courant $x_{TI}$, $y_{TI}$ de l'image cible, est cherchée à une adresse de l'image source $x_{SI}$, $y_{SI}$ calculée à l'aide des polynômes de transformation $G_X$, $G_Y$ stockés dans le bloc 47 :

$$x_{SI} = G_X (x_{TI}, y_{TI})$$

$$y_{SI} = G_Y (x_{TI}, y_{TI})$$

Le point trouvé à l'adresse $x_{SI}$, $y_{SI}$ dans l'image source SI n'étant en général pas un pixel, le niveau de lumière monochromatique ou niveau de gris est calculé pour ce point par interpolation à partir de l'intensité de ses voisins pixels dans cette image source. Puis la valeur d'intensité calculée par interpolation est attribuée au pixel courant à l'adresse $x_{TI}$, $y_{TI}$ dans l'image cible et est mémorisée dans la seconde mémoire d'image.

**Revendications**

**1.** Dispositif de formation d'image comprenant :

un système de prise de vue (1),
un système de saisie (2) des données d'une image source (SI) distordue par le système de prise de vues,
un système de numérisation (3) de ladite image source (SI) incluant une première mémoire d'image pour le stockage des données d'intensité de chaque pixel repéré par une adresse dans une matrice bidimensionnelle,
un système de traitement d'image numérique (4,47) de construction d'une image cible (TI) corrigée en distorsions, correspondant à l'image source (SI),

dans lequel, le système de traitement d'image comprend:

un premier sous-ensemble (4) de détermination préalable à partir des données d'image d'une image source TEST distordue (SG-2), d'un centre optique ($OC^n$) et d'une fonction polynomiale ($F^{Nopt/NLast}$) de correction des distorsions radiales autour de ce centre optique,
un second sous-ensemble (47) incluant une mémoire de stockage du centre optique et de la fonction polynomiale déterminés par le premier sous-ensemble, un bloc de calcul qui applique la fonction polynomiale de correction à chaque adresse de pixel de l'image cible (TI) pour fournir l'adresse d'un point dans l'image source distordue (SI) où trouver une donnée d'intensité à appliquer à l'adresse de départ dans l'image cible, et
une seconde mémoire d'image pour le stockage des données de l'image cible (TI) reconstruite;

**caractérisé en ce** le premier sous-ensemble (4) comprend:

des blocs de traitement de l'image source TEST, ladite image source TEST étant en forme de grille appelée grille source ($SG^0$), pour construire une image cible TEST appelée grille théorique ($TG^n$), lesdits blocs de traitement incluant:

un bloc d'extraction (41) de points de référence ($R_k$) aux intersections des barreaux de la grille source ($SG^0$),

un bloc d'estimation (42) d'une première grille théorique ($TG^0$) approchée, calculant l'adresse d'un centre ($GC^0$) et la grandeur d'un pas ($GM^0$) de ladite première grille théorique ($TG^0$),

un bloc d'estimation (43) d'une grille théorique ($TG^n$) corrigée en distorsion, calculant par itération l'adresse d'un centre ($GC^n$) et la grandeur d'un pas ($GM^n$) de ladite grille théorique corrigée ($TG^n$),

un bloc de calcul (44) d'un polynôme de correction des distorsions radiales fournissant une loi de transformation pour passer d'un point de la grille théorique corrigée à l'itération n ($TG^n$) à un point de référence ($R_k$) de la grille source distordue, loi de transformation à l'itération n,

un bloc de calcul (45) d'une erreur de modélisation ($E^n$) due à la loi de transformation à l'itération n,

un bloc de calcul (46) d'une adresse modifiée du centre optique ($Oc^n$) qui minimise l'erreur de modélisation.

2. Procédé pour mettre en oeuvre le dispositif selon la Revendication 1, pour effectuer des corrections des distorsions optiques géométriques produites dans une image par un système de prise de vue, ce procédé comprenant des étapes préliminaires de :

a) saisie des données et numérisation d'une image source TEST ($SG^0$), incluant le stockage des données d'intensité de chaque pixel repéré par une adresse dans une matrice bidimensionnelle,

b) estimation d'un centre optique ($OC^n$) localisé au mieux au centre des distorsions optiques de l'image source TEST ($SG^0$) et report de ce centre optique dans une image numérique à construire ($TG^n$), référencée image TEST cible, représentant l'image source TEST corrigée des distorsions optiques,

c) estimation d'une fonction polynomiale ($F^n$) pour faire correspondre à l'adresse d'un pixel ($TR_m^n$) dans l'image TEST cible corrigée, l'adresse d'un point correspondant ($R_k$), noté point de référence, dans l'image source TEST distordue, en se fondant sur l'hypothèse de base que les distorsions optiques géométriques dans l'image source TEST sont radiales autour du centre de distorsion, de sorte que lesdits points correspondants ($TR_m^n$, $R_k$) sont alignés au mieux avec le centre optique estimé ($OC^n$);

ce procédé comprenant en outre, dans les étapes préliminaires, des étapes itératives de :

d) estimation de la meilleure fonction polynomiale ($F^{Nopt}$) capable de minimiser, à une itération d'ordre Nopt, l'erreur de modélisation ($E^n$) réalisée sur la localisation des pixels de l'image TEST cible ($TG^n$) construite à une itération précédente (n) selon l'hypothèse des distorsions radiales autour d'un centre optique ($OC^n$) estimé à ladite itération précédente,

e) estimation, à une itération d'ordre Nlast, d'un centre optique modifié optimisé ($OC^{Nlast}$) et réestimation dans ces conditions d'une nouvelle fonction polynomiale ($F^{Nopt(Nlast)}$) capable de minimiser davantage l'erreur de modélisation réalisée sur la localisation des pixels de l'image cible reconstruite selon l'hypothèse des distorsions radiales autour dudit meilleur centre optique ($OC^{Nlast}$) estimé;

et dans l'étape a) préliminaire de saisie de données et numérisation, l'image source TEST est l'image numérisée d'une grille à mailles rectangulaires dont les barreaux sont parallèles aux lignes et colonnes de pixels, aux erreurs de distorsions optiques près, référencée grille source,

et dans l'étape b) l'estimation d'un centre optique ($OC^n$) est effectuée de manière itérative à partir d'une itération zéro comprenant la construction d'une première image TEST cible corrigée en distorsion, notée première grille cible ($TG^0$) au moyen des sous-étapes de :

extraction d'un point par zone d'intersection des barreaux de la grille source, ces points extraits étant notés points de référence ($R_k$) de la grille source ($SG^0$),

estimation d'un point de référence ($R_k^0$) le plus proche du centre de distorsions de la grille source,

report de ce point de référence ($R_k^0$) dans la première grille cible ($TG^0$) pour constituer le premier centre de grille ($GC^0$),

estimation d'un premier pas de grille ($GM^0$) pour ladite grille cible ($TG^0$),

estimation d'un premier centre optique approximatif ($OC^0$) pour ladite première grille cible ($TG^0$), situé en coïncidence avec ledit point de référence ($R_k^0$) reporté et en coïncidence avec le centre de grille ($GC^0$).

3. Procédé selon la Revendication 2, dans lequel les étapes préliminaires sont faites une fois pour toutes, ce procédé comprenant à l'issue des étapes préliminaires, des étapes de :

$a_o$) saisie des données d'une image source (SI) quelconque distordue par le dispositif de prise de vue, et numérisation et stockage des données d'intensité de chaque pixel,

f) correction proprement dite des distorsions optiques, en appliquant à une image cible numérique (TI) à construire, la fonction polynomiale ($F^n$) estimée, de manière à fournir à partir de chaque adresse de cette image cible (TI), une adresse correspondante dans l'image numérique source (SI) distordue où trouver une donnée d'intensité à appliquer à ladite adresse dans l'image cible à construire.

4. Procédé selon la revendication 3, dans lequel les étapes préliminaires sont faites une fois pour toutes, ce procédé comprenant à l'issue des étapes préliminaires, des étapes de :

$a_o$) saisie des données d'une image source (SI) quelconque distordue par le dispositif de prise de vue, numérisation et stockage des données d'intensité de chaque pixel ;

f') correction proprement dite des distorsions optiques, en appliquant, à une image cible numérique (TI) à construire, la fonction polynomiale ($F^{Nopt(Nlast)}$) estimée la meilleure, de manière à fournir à partir de chaque adresse dans cette image cible (TI), une adresse correspondante dans l'image numérique source (SI) distordue où trouver une fonction d'intensité à appliquer à ladite adresse dans l'image cible à construire.

5. Procédé selon la revendication 4, dans lequel à l'étape d) l'estimation itérative de la meilleure fonction polynomiale ($F^{Nopt}$) comprend l'estimation à l'itération d'ordre zéro d'une première fonction polynomiale ($F^0$) comprenant les sous-étapes de :

construction des points ($TR_m^0$) de ladite première grille cible à partir du centre de grille ($GC^0$) et du pas de grille ($GM^0$) pour correspondre aux points de référence ($R_k$) d'intersection des barreaux de grille source ($SG^0$)

mise en correspondance des points de grille ($TR_m^0$) de la première grille cible ($TG^0$) et des points de référence ($R_k$) de la grille source ($SG^0$) en localisant le centre de grille ($GC^0$) en coïncidence avec le point de référence ($R_k^0$) le plus proche du centre de distorsion,

formation des couples $P_k^0$ constitués des points de grille ($TR_m^0$) et des points de référence ($R_k$) correspondants, de proche en proche à partir du centre vers les bords de la grille cible ($TG^0$),

estimation de couples de rayons ($X_k^0$, $Y_k^0$) formés de segments joignant le centre optique ($OC^0$) de la première grille cible ($TG^0$) et chaque points des couples points de grille cible-point de référence ($TR_m^0$, $R_k$),

calcul de la première fonction polynomiale ($F^0$) comme celle qui relie le mieux les couples de rayons ($X_k^0$, $Y_k^0$) pour respecter l'hypothèse selon laquelle les distorsions sont radiales autour du centre optique connu ($OC^0$).

6. Procédé selon la revendication 5, dans lequel à l'étape d) l'estimation itérative de la meilleure fonction polynomiale ($F^{Nopt}$) comprend l'estimation à une itération d'ordre n > 0, d'une fonction polynomiale ($F^n$) comprenant les sous-étapes de :

construction d'une grille cible ($TG^n$) à l'ordre n, ayant un centre optique ($OC^n$) et des points de grille ($TR_m^n$) définis par un centre de grille ($GC^n$) et un pas de grille ($GM^n$),

mise en correspondance des points de grille ($TR_m^n$) de la grille cible ($TG^n$) et des points de référence ($R_k$) de la grille source ($SG^n$) en localisant le centre de grille cible ($GC^n$) par ses coordonnées déterminées à l'itération précédente,

formation de couples ($P_k^n$) de points de grille ($TR_m^n$)-point de référence ($R_k$) de proche en proche à partir du centre vers les bords de l'image cible ($TG^n$),

estimation des couples de rayons ($X_k^n$, $Y_k^n$) formés des segments joignant le centre optique connu ($OC^n$) et chaque point des couples ($TR_m^n$, $R_k$),

calcul de la fonction polynomiale ($F^n$) comme celle qui relie le mieux les couples de rayons ($X_k^n$, $Y_k^n$) pour respecter l'hypothèse selon laquelle les distorsions géométriques sont radiales autour du centre optique ($OC^n$).

7. Procédé selon la revendication 6, dans lequel la construction d'une grille cible ($TG^n$) à l'itération courante (n) comprend les sous-étapes de :

localisation d'un centre optique ($OC^n$) nouvellement mis à jour,

localisation des points de grille ($TR_m^{n-1}$) et points de référence ($R_k$) correspondants constituant des couples ($P_k^{n-1}$) formés à l'itération précédente (n-1),

estimation des distances géométriques ($\Delta_k^{n-1}$) abscisses des points de grille ($TR_m^{n-1}$) sur les rayons passant par le centre optique nouvellement mis à jour ($OC^n$) et par les points de référence correspondants ($R_k$) des couples ($P_k^{n-1}$) formés à cette itération précédente (n-1),

estimation d'un critère référencé critère radial $\phi^n$ qui exprime l'hypothèse radiale que la meilleure grille cible corrigée correspond à la minimisation des distances géométriques ($\Delta_k^{n-1}$),

minimisation du critère radial $\phi^n$ exprimé en fonction des coordonnées du centre et des composantes du pas de la grille à l'itération (n-1), fournissant les coordonnées du centre et les composantes du pas de la. grille cible à l'itération n.

**8.** Procédé selon la revendication 7, dans lequel l'étape e) d'estimation du meilleur centre optique ($OC^{Nlast}$) est réalisée dans une boucle d'itération dans laquelle à chaque itération courante (n) la localisation du centre optique ($OC^n$) est modifiée, puis réintroduite dans la construction de la grille cible courante ($TG^n$) pour la détermination d'une nouvelle fonction polynomiale ($F^n$) et l'estimation de l'erreur de modélisation ($E^n$) correspondante, la meilleure localisation du centre ($OC^{Nlast}$) étant celle qui résulte en l'erreur de modélisation la plus faible correspondant à la meilleure fonction polynomiale ($F^{Nopt(Nlast)}$).

**Patentansprüche**

**1.** Bilderzeugungsgerät, das Folgendes umfasst:

ein Aufnahmesystem (1),
ein System (2) zum Erfassen der Daten eines von dem Aufnahmesystem verzerrten Quellenbildes (SI),
ein System (3) zur Digitalisierung des genannten Quellenbildes (SI), das einen ersten Bildspeicher zum Speichern der Helligkeitsdaten jedes durch eine Adresse in einer zweidimensionalen Matrix gekennzeichneten Pixels enthält,
ein System (4, 47) zur Verarbeitung des digitalen Bildes zur Erzeugung eines Zielbildes (TI) mit korrigierten Verzerrungen, das dem Quellenbild (SI) entspricht,

wobei das Bildverarbeitungssystem Folgendes umfasst:

ein erstes Teilsystem (4) zur vorläufigen Bestimmung, ausgehend von den Bilddaten eines verzerrten Quellenbildes TEST (SG-2), eines optischen Mittelpunktes ($OC^n$) und einer polynomischen Funktion ($F^{Nopt/Nlast}$) zur Korrektur der radialen Verzerrungen um diesen optischen Mittelpunkt,
ein zweites Teilsystem (47), das Folgendes umfasst: einen Speicher zum Speichern des von dem ersten Teilsystem bestimmten optischen Mittelpunktes und der polynomischen Funktion, einen Berechnungsblock, der die polynomische Korrekturfunktion auf jede Pixeladresse des Zielbildes (TI) anwendet, um die Adresse eines Punktes in dem verzerrten Quellenbild (SI) zu liefern, an der ein Helligkeitswert zu finden ist, der auf die Anfangsadresse im Zielbild anzuwenden ist, und
einen zweiten Bildspeicher zur Speicherung der Daten des rekonstruierten Zielbildes (TI);

**dadurch gekennzeichnet, dass** das erste Teilsystem (4) Folgendes umfasst:

Blöcke zur Verarbeitung des Quellenbildes TEST, wobei das genannte Quellenbild TEST in Form eines Rasters, genannt Quellenraster ($SG^0$), vorliegt, um ein Zielbild TEST, genannt theoretisches Raster ($TG^n$), zu konstruieren, wobei die genannten Verarbeitungsblöcke Folgendes beinhalten:

einen Block (41) zur Extraktion von Bezugspunkten ($R_k$) an den Schnittstellen der Linien des Quellenrasters ($SG^0$),
einen Block (42) zur Ermittlung eines ersten angenäherten, theoretischen Rasters ($TG^0$), indem die Adresse eines Mittelpunktes ($GC^0$) und die Größe einer Teilung ($GM^0$) des genannten ersten theoretischen Rasters ($TG^0$) berechnet werden,
einen Block (43) zur Ermittlung eines theoretischen Rasters ($TG^n$) mit korrigierter Verzerrung, indem durch Iteration die Adresse eines Mittelpunktes ($GC^n$) und die Größe einer Teilung ($GM^n$) des genannten korrigierten theoretischen Rasters ($TG^n$) berechnet werden,
einen Block (44) zur Berechnung eines Polynoms zur Korrektur der radialen Verzerrungen, der eine Umwandlungsregel liefert, um von einem Punkt des bei der n-ten Iteration korrigierten, theoretischen Rasters ($TG^n$) zu einem Bezugspunkt ($R_k$) des verzerrten Quellenrasters überzugehen, eine Umwandlungsregel bei der n-ten Iteration,
einen Block (45) zur Berechnung eines durch die Umwandlungsregel bei der n-ten Iteration verursachten Modellierfehlers ($E^n$),
einen Block (46) zur Berechnung einer geänderten Adresse des optischen Mittelpunktes ($OC^n$), die den Modellierfehler minimiert.

**2.** Verfahren zum Einsatz des Gerätes nach Anspruch 1 zur Verbesserung der durch ein Aufnahmegerät in einem Bild erzeugten geometrischen optischen Verzerrungen, wobei dieses Verfahren folgende vorbereitende Schritte umfasst:

(a) Erfassung der Daten und Digitalisierung eines Quellenbildes TEST ($SG^0$) einschließlich der Speicherung der Helligkeitsdaten jedes durch eine Adresse in einer zweidimensionalen Matrix gekennzeichneten Pixels;

(b) Ermittlung eines optischen Mittelpunktes ($OC^n$), der bestmöglich im Mittelpunkt der optischen Verzerrungen des Quellenbildes TEST ($SG^0$) positioniert ist, und Übertragung dieses optischen Mittelpunktes in ein zu konstruierendes digitales Bild ($TG^n$) mit der Bezeichnung Zielbild TEST, das das Quellenbild TEST mit korrigierten optischen Verzerrungen darstellt;

(c) Ermittlung einer polynomischen Funktion ($F^n$) zur Zuordnung der Adresse eines Punktes ($R_k$), bezeichnet als Bezugspunkt, in dem verzerrten Quellenbild TEST zu der Adresse eines Pixels ($TR_m^n$) in dem korrigierten Zielbild TEST, indem von der grundlegenden Hypothese ausgegangen wird, dass die geometrischen optischen Verzerrungen in dem Quellenbild TEST radial um den Verzerrungsmittelpunkt auftreten, so dass die genannten entsprechenden Punkte ($TR_m^n$, $R_k$) bestmöglich zu dem ermittelten optischen Mittelpunkt ($OC^n$) ausgerichtet sind;

wobei dieses Verfahren außerdem in den vorbereitenden Schritten die folgenden iterativen Schritte umfasst:

(d) Ermittlung der besten polynomischen Funktion ($F^{Nopt}$), die bei einer Iteration Nopt den Modellierfehler ($E^n$) minimieren kann, der bei der Position der Pixel des bei der vorhergehenden (n-ten) Iteration gemäß der Hypothese der radialen Verzerrungen um einen bei der genannten vorhergehenden Iteration ermittelten optischen Mittelpunkt ($OC^n$) konstruierten Zielbildes TEST ($TG^n$) auftritt;

(e) Ermittlung eines veränderten, optimierten optischen Mittelpunktes ($OC^{Nlast}$) bei einer Iteration Nlast und erneute Ermittlung unter diesen Bedingungen einer neuen polynomischen Funktion ($F^{Nopt,Nlast}$), die den Modellierfehler noch weiter minimieren kann, der bei der Position der Pixel des gemäß der Hypothese der radialen Verzerrungen um den genannten ermittelten besten optischen Mittelpunkt ($OC^{Nlast}$) konstruierten Zielbildes auftritt;

(f) und in dem vorbereitenden Schritt (a) der Datenerfassung und Digitalisierung ist das Quellenbild TEST das digitalisierte Bild eines als Quellenraster bezeichneten Rasters aus rechteckigen Maschen, dessen Linien, abgesehen von den Fehlern der optischen Verzerrungen, parallel zu den Pixelzeilen und -spalten verlaufen, und in dem Schritt (b) erfolgt die Ermittlung eines optischen Mittelpunktes ($OC^n$) iterativ ausgehend von einer 0-ten Iteration, die die Konstruktion eines ersten Zielbildes TEST mit korrigierten Verzerrungen beinhaltet, das als erstes Zielraster ($TG^0$) bezeichnet wird, in den folgenden Teilschritten:

Extraktion eines Punktes pro Schnittbereich der Linien des Quellenrasters, wobei diese extrahierten Punkte als Bezugspunkte ($R_k$) des Quellenrasters ($SG^0$) bezeichnet werden,

Ermittlung eines Bezugspunktes ($R_k^0$), der sich am nächsten am Mittelpunkt der Verzerrungen des Quellenrasters befindet,

Übertragung dieses Bezugspunktes ($R_k^0$) in das erste Zielraster ($TG^0$), um den ersten Rastermittelpunkt ($GC^0$) zu bilden,

Ermittlung einer ersten Rasterteilung ($GM^0$) für das genannte Zielraster ($TG^0$),

Ermittlung eines ersten ungefähren optischen Mittelpunktes ($OC^0$) für das genannte erste Zielraster ($TG^0$), das mit dem genannten übertragenen Bezugspunkt ($R_k^0$) und dem Rastermittelpunkt ($GC^0$) zusammenfällt.

**3.** Verfahren nach Anspruch 2, bei dem die vorbereitenden Schritte nur einmal durchgeführt werden, wobei das Verfahren nach Abschluss der vorbereitenden Schritte die folgenden Schritte umfasst:

($a_0$) Erfassung der Daten eines beliebigen durch das Aufnahmesystem verzerrten Quellenbildes (SI) und Digitalisierung und Speicherung der Helligkeitsdaten jedes Pixels;

(f) eigentliche Korrektur der optischen Verzerrungen, indem auf ein zu konstruierendes, digitales Zielbild (TI) die ermittelte polynomische Funktion ($F^n$) angewendet wird, so dass ausgehend von jeder Adresse dieses Zielbildes (TI) eine entsprechende Adresse in dem digitalen, verzerrten Quellenbild (SI) geliefert wird, an der ein Helligkeitswert zu finden ist, der auf die genannte Adresse in dem zu konstruierenden Zielbild anzuwenden ist.

**4.** Verfahren nach Anspruch 3, bei dem die vorbereitenden Schritte nur einmal durchgeführt werden, wobei das Verfahren nach Abschluss der vorbereitenden Schritte die folgenden Schritte umfasst:

($a_0$) Erfassung der Daten eines auf irgend eine Art durch das Aufnahmesystem verzerrten Quellenbildes (SI) und Digitalisierung und Speicherung der Helligkeitsdaten jedes Pixels;

(f) eigentliche Korrektur der optischen Verzerrungen, indem auf ein zu konstruierendes Zielbild (TI) die als beste ermittelte polynomische Funktion ($F^{Nopt,Nlast}$) angewendet wird, so dass ausgehend von jeder Adresse dieses Zielbildes (TI) eine entsprechende Adresse in dem digitalen, verzerrten Quellenbild (SI) geliefert wird, an der ein Helligkeitswert zu finden ist, der auf die genannte Adresse in dem zu konstruierenden Zielbild anzuwenden ist.

**5.** Verfahren nach Anspruch 4, bei dem bei Schritt (d) die iterative Ermittlung der besten polynomischen Funktion ($F^{Nopt}$) die Ermittlung bei der 0-ten Iteration einer ersten polynomischen Funktion ($F^0$) beinhaltet, die folgenden Teilschritte umfasst:

Konstruktion der Punkte ($TR_m^0$) des genannten ersten Zielrasters ausgehend vom Rastermittelpunkt ($GC^0$) und der Rasterteilung ($GM^0$), damit sie den Bezugspunkten ($R_k$) der Schnittpunkte der Linien des Quellenrasters ($SG^0$) entsprechen;

Zuordnung der Rasterpunkte ($TR_m^0$) des ersten Zielrasters ($TG^0$) zu den Bezugspunkten ($R_k$) des Quellenrasters ($SG^0$), indem der Rastermittelpunkt ($GC^0$) so positioniert wird, dass er mit dem Bezugspunkt ($R_k^0$) zusammenfällt, der sich am nächsten am Verzerrungsmittelpunkt befindet;

Bildung der Paare $P_k^0$, die aus den Rasterpunkten ($TR_m^0$) und den entsprechenden Bezugspunkten ($R_k$) bestehen, und dies nach und nach ausgehend vom Mittelpunkt zu den Rändern des Zielrasters ($TG^0$) hin;

Ermittlung von Radienpaaren ($X_k^0$, $Y_k^0$), die aus Strecken bestehen, die den optischen Mittelpunkt ($OC^n$) des ersten Zielrasters ($TG^0$) mit jedem Punkt der Paare aus Punkten des Zielrasters und Bezugspunkten ($TR_m^0$, $R_k$) verbinden;

Berechnung der ersten polynomischen Funktion ($F^0$) als diejenige, die die Radienpaare ($X_k^0$, $Y_k^0$) bestmöglich verbinden, um der Hypothese Rechnung zu tragen, gemäß der die Verzerrungen radial um den bekannten optischen Mittelpunkt ($OC^0$) auftreten.

**6.** Verfahren nach Anspruch 5, bei dem bei Schritt (d) die iterative Ermittlung der besten polynomischen Funktion ($F^{Nopt}$) die Ermittlung bei der n>0-ten Iteration einer polynomischen Funktion ($F^n$) beinhaltet, die folgende Teilschritte umfasst:

Konstruktion eines n-ten Zielrasters ($TG^n$), dessen optischer Mittelpunkt ($OC^n$) und dessen Rasterpunkte ($TR_m^n$) durch einen Rastermittelpunkt ($GC^n$) und eine Rasterteilung ($GM^n$) definiert werden;

Zuordnung der Rasterpunkte ($TR_m^n$) des Zielrasters ($TG^n$) zu den Bezugspunkten ($R_k$) des Quellenrasters ($SG^n$), indem der Mittelpunkt des Zielrasters ($GC^n$) durch seine bei der vorhergehenden Iteration bestimmten Koordinaten lokalisiert wird;

Bildung von Paaren ($P_k^n$) aus Rasterpunkten ($TR_m^n$) und Bezugspunkten ($R_k$), und dies nach und nach ausgehend vom Mittelpunkt zu den Rändern des Zielbildes ($TG^n$) hin;

Ermittlung der Radienpaare ($X_k^n$, $Y_k^n$), die aus Strecken bestehen, die den bekannten optischen Mittelpunkt ($OC^n$) mit jedem Punkt der Paare ($TR_m^n$, $R_k$) verbinden;

Berechnung der polynomischen Funktion ($F^n$) als diejenige, die die Radienpaare ($X_k^n$, $Y_k^n$) bestmöglich verbinden, um der Hypothese Rechnung zu tragen, gemäß der die Verzerrungen radial um den optischen Mittelpunkt ($OC^n$) auftreten.

**7.** Verfahren nach Anspruch 6, bei dem die Konstruktion eines Zielrasters ($TG^n$) bei der aktuellen (n-ten) Iteration die folgenden Teilschritte umfasst:

Lokalisierung eines neu aktualisierten optischen Mittelpunktes ($OC^n$);

Lokalisierung der Rasterpunkte ($TR_m^{n-1}$) und der entsprechenden Bezugspunkte ($R_k$) der bei der vorhergehenden (n-1-ten) Iteration gebildeten Paare ($P_k^{n-1}$);

Ermittlung der geometrischen Abstände ($\Delta_k^{n-1}$) auf der Abzisse der Rasterpunkte ($TR_m^{n-1}$) von den Radien, die durch den neu aktualisierten optischen Mittelpunkt ($OC^n$) und die entsprechenden Bezugspunkte ($R_k$) der bei dieser vorhergehenden (n-1-ten) Iteration gebildeten Paare ($P_k^{n-1}$) verlaufen;

Ermittlung eines als radiales Kriterium $\Phi^n$ bezeichneten Kriteriums, das die radiale Hypothese ausdrückt, dass das beste korrigierte Zielraster der Minimierung der geometrischen Abstände ($\Delta_k^{n-1}$) entspricht;

Minimierung des radialen Kriteriums $\Phi^n$, das als Funktion der Koordinaten des Mittelpunktes und der Komponenten der Rasterteilung bei der (n-1)-ten Iteration ausdrückt wird, indem die Koordinaten des Mittelpunktes und die Komponenten der Teilung des Zielrasters bei der n-ten Iteration geliefert werden.

**8.** Verfahren nach Anspruch 7, bei dem der Schritt (e) der Ermittlung des besten optischen Mittelpunktes ($OC^{Nlast}$) in einer Iterationsschleife durchgeführt wird, in der bei jeder aktuellen (n-ten) Iteration die Position des optischen Mittelpunktes ($OC^n$) verändert wird und dann in die Konstruktion des aktuellen Zielrasters ($TG^n$) zur Bestimmung einer neuen polynomischen Funktion ($F^n$) und der Ermittlung des entsprechenden Modellierfehlers ($E^n$) wieder

eingefügt wird,
wobei die beste Position des Mittelpunktes (OC$^{Nlast}$) diejenige ist, die den geringsten Modellierfehler ergibt, der der besten polynomischen Funktion (F$^{Nopt,Nlast}$) entspricht.

**Claims**

1. A device for forming an image, comprising:

   a camera system (1),
   a system (2) for acquisition of the data of a source image (SI) distorted by the camera system,
   a system (3) for digitizing said source image (SI) including a first image memory for storing the intensity data of each pixel marked by an address in a bidimensional matrix,
   a system (4, 47) for processing the digital image for constructing a distortion-corrected target image (TI) corresponding to the source image (SI), in which the image processing system includes:

   a first sub-assembly (4) for predetermining, on the basis of image data of a distorted TEST source image (SG$^0$), an optical centre (OC$^n$) and a polynomial function (F$^{Nopt/NLast}$) for correcting radial distortions around said optical centre,
   a second sub-assembly (47) including a memory for storing the optical centre and the polynomial function determined by the first sub-assembly, a computing block applying the polynomial correction function to each pixel address of the target image (TI) for supplying the address of a pixel in the distorted source image (SI) in which an intensity data is present which is to be applied to the initial address in the target image, and
   a second image memory for storing data of the reconstructed target image (TI),

   **characterized in that** the first sub-assembly (4) includes:

   blocks for treating the source image TEST, said source image TEST being formed as a grating referred to as source grating (SG$^0$) for constructing a target image TEST referred to as theoretical grating (TG$^n$), said blocks comprising:

   a block (41) for extracting reference points (R$_k$) at the points of intersection of the bars of the source grating (SG$^0$),
   a block (42) for estimating the first approximate theoretical grating (TG$^0$), computing the address of a centre (GC$^0$) and the step size (GM$^0$) of said first theoretical grating (TG$^0$),
   a block (43) for estimating a distortion-corrected theoretical grating (TG$^n$), computing by way of iteration the address of a centre (GC$^n$) and the step size (GM$^n$) of said corrected theoretical grating (TG$^n$),
   a block (44) for computing a correction polynomial of the radial distortions, providing a transformation rule for passing a point of the corrected theoretical grating at the iteration n(TG$^n$) to a reference point (R$_k$) of the distorted source grating, which transformation rule operates at the iteration n,
   a block (45) for computing a patterning error (E$^n$) due to the iteration n transformation rule,
   a block (46) for computing a modified address of the optical centre (OC$^n$) which minimizes the patterning error.

2. A method of correcting geometrical optical distortions produced in an image by a camera system in conformity with the devices claimed in claim 1, which method comprises the preliminary steps of:

   a) acquiring data and digitizing a TEST source image (SG$^0$), including the storage of the intensity data of each pixel marked by an address in a bidimensional matrix,
   b) estimation of an optical centre (OC$^n$) located at best at the optical distortion centre of the TEST source image (SG$^0$) and the ratio of said optical centre computed in a digital image to be constructed (TG$^n$), referenced TEST target image representing the corrected TEST source image of the optical distortions,
   c) estimating a polynomial function (F$^n$) for causing the address of a corresponding point (R$_k$) denoted reference point in the distorted TEST source image to correspond to the address of a pixel (TR$_m^n$) in the corrected TEST target image, based on the hypothesis that the geometrical optical distortions in the TEST source image are radial around the distortion centre, so that said corresponding points (TR$_m^n$, R$_k$) are aligned at best with the estimated optical centre (OC$^n$), this method also comprising, in the preliminary steps, the iterative steps of:

d) estimating the best polynomial function ($F^{Nopt}$) capable of minimizing, at an iteration of the order of Nopt, the patterning error ($E^n$) realised at the localization of the pixels of the TEST target image ($TG^n$) constructed at a preceding iteration (n) in accordance with the hypothesis of radial distortions around an optical centre ($OC^n$) estimated at said preceding iteration,

e) estimating, at an iteration of the order of Nlast, an optimized modified optical centre ($OC^{Nlast}$) and re-estimating under these conditions a new polynomial function ($F^{Nopt(Nlast)}$) capable of further minimizing the patterning error realised at the localization of the pixels of the reconstructed target image in accordance with the hypothesis of radial distortions around said best estimated optical centre ($OC^{Nlast}$);

and in the preliminary step a) of acquiring the data and digitizing, the TEST source image is the digitized image of a rectangular mesh whose bars are parallel to the rows and columns of pixels, to the most approximate optical distortions referred to as source grating,

in the step b) an optical centre ($OC^n$) is estimated in an iterative manner on the basis of a zero iteration comprising the construction of a first distortion-corrected TEST target image referred to as first target grating ($TG^0$) by means of the sub-steps of:

extracting one point per zone of intersection of the bars of the source grating, these extracted points being denoted as reference points ($R_k$) of the source grating ($SG^0$),

estimating a reference point ($R_k^0$) which is nearest to the centre of distortions of the source grating,

transfer of this reference point ($R_k^0$) in the first target grating ($TG^0$) for constituting the first centre of the grating ($GC^0$),

estimating a first grating pitch ($GM^0$) for said target grating ($TG^0$),

estimating a first approximate optical centre ($OC^0$) for said first target grating ($TG^0$) coinciding with said transferred reference point ($R_k^0$) and coinciding with the centre of the grating ($GC^0$).

3. A method as claimed in claim 2, in which the preliminary steps are performed once for all operations, said method comprising, at the start of the preliminary steps, the steps of:

$a_o$) acquiring the data of a source image (SI) distorted in one way or another by the camera device, and digitizing and storing the intensity data of each pixel,

f) correcting the optical distortions by applying the estimated polynomial function ($F^n$) to a digital target image (TI) to be constructed, so as to supply on the basis of each address of this target image (TI) a corresponding address in the distorted digital source image (SI) in which an intensity data is found which is applied to said address in the target image to be constructed.

4. A method as claimed in claim 3, in which the preliminary steps are performed once for all operations, which method comprises, at the start of the preliminary steps, the steps of:

$a_o$) acquiring the data of a source image (SI) distorted in one way or another by the camera device, digitizing and storing the intensity data of each pixel;

f) correcting the optical distortions by applying the best estimated polynomial function ($F^{Nopt(Nlast)}$) to a digital target image (TI) to be constructed, so as to supply on the basis of each address in said target image (TI) a corresponding address in the distorted digital source image (SI) in which an intensity function is found which is applied to said address in the target image to be constructed.

5. A method as claimed in claim 4, in which in step d) the iterative estimation of the best polynomial function ($F^{Nopt}$) comprises the estimation, in a zero-order iteration, of a first polynomial function ($F^0$) comprising the sub-steps of:

constructing points ($TR_m^0$) of the first target grating on the basis of the centre of the grating ($GC^0$) and the grating step ($GM^0$) to correspond to the reference points ($R_k$) of intersection of the bars of the source grating ($SG^0$),

causing the grating points ($TR_m^0$) of the first target grating ($TG^0$) and the reference points ($R_k$) of the source grating ($SG^0$) to correspond by localizing the centre of the grating ($GC^0$) coinciding with the reference point ($R_k^0$) which is nearest to the centre of distortion,

forming the pairs ($P_k^0$) constituted by the grating points ($TR_m^0$) and the corresponding reference points ($R_k$) step by step from the centre to the edges of the target grating ($TG^0$),

estimating the pairs of radii ($X_k^0$, $Y_k^0$) formed by segments joining the optical centre ($OC^0$) of the first target grating ($TG^0$) and each point of the pairs of target grating points and the reference point ($TR_m^0$, $R_k$),

computing the first polynomial function ($F^0$) as the one which best connects the pairs of radii ($X_k^0$, $Y_k^0$) in conformity with the hypothesis in accordance with which the distortions are radial around the known optical centre ($OC^0$).

6. A method as claimed in claim 5, in which in step d) the iterative estimation of the best polynomial function ($F^{Nopt}$) comprises the estimation, in an n > 0 order iteration, of a polynomial function ($F^n$) comprising the sub-steps of:

constructing a target grating ($TG^n$) at the order of n, having an optical centre ($OC^n$) and grating points ($TR_m^n$) defined by a centre of the grating ($GC^n$) and a grating pitch ($GM^n$),
causing the grating points ($TR_m^n$) of the target grating ($TG^n$) to correspond to the reference points ($R_k$) of the source grating ($SG^n$) by localizing the centre of the target grating ($GC^n$) by means of its coordinates determined in the preceding iteration,
forming pairs ($P_k^n$) of grating points ($TR_m^n$) and reference points ($R_k$) step by step from the centre towards the edges of the target image ($TG^n$),
estimating the pairs of radii ($X_k^n$, $Y_k^n$) formed by segments joining the known optical centre ($OC^n$) and each point of the pairs ($TR_m^n$, $R_k$),
computing the polynomial function ($F^n$) as the one which best connects the pairs of radii ($X_k^n$, $Y_k^n$) in conformity with the hypothesis in accordance with which the geometrical distortions are radial around the optical centre ($OC^n$).

7. A method as claimed in claim 6, in which the construction of a target grating ($TG^n$) at the current iteration (n) comprises the sub-steps of:

localizing an optical centre ($OC^n$) which is re-updated,
localizing the grating points ($TR_m^{n-1}$) and corresponding reference points ($R_k$) constituting pairs ($P_k^{n-1}$) formed at the preceding iteration (n-1),
estimating the geometrical distances ($\Delta_k^{n-1}$) on the abscissa of the grating points ($TR_m^{n-1}$) of the radii passing through the re-updated optical centre ($OC^n$) and through the corresponding reference points ($R_k$) of the pairs ($P_k^{n-1}$) formed at this preceding iteration (n-1),
estimating a criterion referred to as radial criterion $\Phi^n$ which expresses the radial hypothesis that the best corrected target grating corresponds to the minimization of the geometrical distances ($\Delta_k^{n-1}$),
minimizing the radial criterion $\Phi^n$ expressed as a function of the coordinates of the centre and of the components of the grating pitch at the iteration (n-1), supplying the centre coordinates and the components of the target grating pitch at the iteration n.

8. A method as claimed in claim 7, in which the step e) of estimating the best optical centre ($OC^{Nlast}$) is realised in an iteration loop in which, at each current iteration (n), the localization of the optical centre ($OC^n$) is modified and then re-introduced in the construction of the current target grating ($TG^n$) for determining a new polynomial function ($F^n$), and estimating the corresponding patterning error ($E^n$),
the best localization of the centre ($OC^{Nlast}$) being that which results in the smallest patterning error corresponding to the best polynomial function ($F^{Nopt(Nlast)}$).

EP 0 720 125 B1

FIG. 1A

FIG. 1B

FIG. 1C

FIG. 2

EP 0 720 125 B1

FIG.3A

FIG.3B

FIG.3C

FIG. 3D

FIG. 3E

FIG. 3F

FIG. 3G

FIG. 4A

FIG. 4B

FIG. 4C

FIG. 4D

FIG. 4E

FIG. 5A

FIG. 5B

FIG. 6A

FIG. 6B

$$\begin{cases} \lambda_{x(k)} = 4 \\ \mu_{y(k)} = 2 \end{cases}$$

FIG. 7A

FIG. 7b

FIG. 7C

FIG. 8A

FIG. 8D

FIG. 8B

FIG. 8C

35